(19) Europäisches Patentamt
European Patent Office
Office européen des brevets

(11) EP 0 793 693 B2

(12) **NEUE EUROPÄISCHE PATENTSCHRIFT**

(45) Veröffentlichungstag und Bekanntmachung des Hinweises auf die Entscheidung über den Einspruch:
**24.07.2002 Patentblatt 2002/30**

(45) Hinweis auf die Patenterteilung:
**07.04.1999 Patentblatt 1999/14**

(21) Anmeldenummer: **95939291.1**

(22) Anmeldetag: **21.11.1995**

(51) Int Cl.[7]: **C09D 4/06**, C09D 11/10, C09K 19/38

(86) Internationale Anmeldenummer:
**PCT/EP95/04576**

(87) Internationale Veröffentlichungsnummer:
**WO 96/02597 (01.02.1996 Gazette 1996/06)**

(54) **VERFAHREN ZUM BESCHICHTEN UND BEDRUCKEN VON SUBSTRATEN**
PROCESS FOR COATING AND PRINTING SUBSTRATES
PROCEDE PERMETTANT DE REVETIR OU D'IMPRIMER DES SUBSTRATS

(84) Benannte Vertragsstaaten:
**AT BE CH DE ES FR GB IT LI NL**

(30) Priorität: **23.11.1994 DE 4441651**
**01.09.1995 DE 19532419**

(43) Veröffentlichungstag der Anmeldung:
**10.09.1997 Patentblatt 1997/37**

(73) Patentinhaber: **BASF AKTIENGESELLSCHAFT**
**67056 Ludwigshafen (DE)**

(72) Erfinder:
- **BECK, Erich**
  **D-68528 Ladenburg (DE)**
- **MEYER, Frank**
  **68165 Mannheim (DE)**
- **POTH, Ulrich**
  **D-48163 Münster (DE)**
- **SIEMENSMEYER, Karl**
  **D-67227 Frankenthal (DE)**
- **SIERAKOWSKI, Claudia**
  **D-64347 Griesheim (DE)**
- **GREIF, Norbert**
  **D-67273 Bobenheim (DE)**
- **OSTERTAG, Werner**
  **D-67269 Grünstadt (DE)**
- **ZIRNSTEIN, Michael**
  **D-69198 Schriesheim (DE)**
- **LEYRER, Reinhold**
  **D-67061 Ludwigshafen (DE)**
- **JAHNS, Ekkehard**
  **D-69469 Weinheim (DE)**
- **ETZBACH, Karl-Heinz**
  **D-67227 Frankenthal (DE)**
- **SCHUHMACHER, Peter**
  **D-68163 Mannheim (DE)**

(56) Entgegenhaltungen:
**EP-A- 0 358 208** **DE-A- 4 342 280**
**DE-A- 4 418 075** **FR-A- 2 537 976**
**GB-A- 2 132 623** **GB-A- 2 276 883**

- **Römpp Chemie Lexikon, 8. Auflage, S. 986**
- **International Display Research Conference, 1991, N. Häberle et al. "Right and Left Circular Polarizing Colors Filters Made From Crosslinkable Cholesteric LC-Silicones"**
- **Römpp Lexikon Lacke und Druckfarbe, Stuttgart, 1998, S. 150, 342**



Printed by Jouve, 75001 PARIS (FR)

## Beschreibung

Die Erfindung betrifft ein einfügen Verfahren zur Beschichtung mittels Spritzen, Rollcoaten, Tauchen oder mit Hilfe eines Gießspaltes oder zum Bedrucken von Substraten mit einem Beschichtungs- bzw. einem Bedruckungsmittel, dadurch gekennzeichnet, daß man eine polymerisierbare Masse, die flüssigkristalline, polymerisierbare Monomere, welche zwei reaktive Gruppen enthalten, enthält, auf das Substrat aufbringt und daß man anschließend die Polymerisation vornimmt, wobei das Beschichtungsmittel bzw. das Bedruckungsmittel

$a_1$) ein chirales flüssigkristallines Monomeres und

b) ein polymeres Bindemittel und/oder monomere Verbindungen, die durch Polymerisation in das polymere Bindemittel überführt werden können oder, im Falle von Dispersionsbeschichtungen und Druckfarben, ein Dispergierhilfsmittel d)

enthält, oder das Beschichtungsmittel bzw. das Bedruckungsmittel

$a_2$) ein achirales flüssigkristallines Monomeres,

b) ein polymeres Bindemittel und/oder monomere Verbindungen, die durch Polymerisation in das polymere Bindemittel überführt werden können oder, im Falle von Dispersionsbeschichtungen und Druckfarben, ein Dispergierhilfsmittel d) und
c) eine nicht flüssigkristalline chirale Verbindung

enthält.

Weiterhin betrifft die Erfindung als Dispersionsfarben und Druckpasten geeignete Mischungen, die solche polymerisierbaren flüssigkristallinen Verbindungen enthalten, sowie ein Verfahren zur Herstellung von Pigmenten aus diesen Verbindungen.
Oberflächenbeschichtete Materialien, deren Farbeindruck vom Betrachtungswinkel abhängig ist, eröffnen interessante anwendungstechnische Möglichkeiten.
Aus der Schrift GB 2 132 632 sind flüssigkristalline (Dihydro-)Cholesterol-Derivate und Mischungen solcher Derivate bekannt, welche über eine (Meth)Acrylatgruppe verfügen und polymerisierbar sind. Weitere Substanzen, welche solchen Derivaten und ihren Mischungen zugegeben werden können, sind gemäß dieser Schrift - als optionale Komponente(n) - Vernetzter, welche selbst aber kein flüssigkristallines Verhalten zeigen. Das Hauptaugenmerk kommt im Rahmen dieser Schrift der Herstellung von flüssigkristallinen Filmen zu, welche aber entsprechend der verwendeten (Dihydro-)Cholesterolderivate nur einen geringen Vernetzungsgrad aufweisen sollten.
In der deutschen Patentanmeldung DE-A 35 35 547 wird ein Verfahren beschrieben, bei dem eine Mischung cholesterinhaltiger Mono-acrylate über eine Photovernetzung zu cholesterischen Schichten verarbeitet werden kann. Als lineares Polymeres mit den mesogenen Molekülteilen in der Seitenkette ist ein solches Material allerdings mechanisch nicht sehr stabil.
In der DE-A 42 40 743 sind Pigmente beschrieben, deren Farbe vom Betrachtungswinkel abhängig ist und die aus orientierten dreidimensional vemetzten Substanzen mit flüssigkristalliner Struktur mit chiraler Phase sowie gegebenenfalls weiteren Farbstoffen und Pigmenten bestehen. Diese Pigmente eignen sich zum Färben von Lacken, Kunststoffen, Faserrohstoffen, Kosmetika oder von Druckfarben aller Art, z.B. von Siebdruckfarben.
Zur Herstellung dieser Pigmente ist es jedoch notwendig, daß dreidimensional vernetzbare flüssigkristalline Substanzen mit chiraler Phase auf eine Unterlage aufgebracht, auf dieser Unterlage zu einer spröden Schicht vernetzt und nach dem Vemetzen von der Unterlage abgelöst werden. Die nach Mahlen erhaltenen Pigmente werden dann in Lacksysteme oder Druckfarben eingearbeitet.
Bei der Verwendung zur Beschichtung von Substraten erweisen sich diese Materialien häufig wegen der ungleichmäßigen Oberfläche als nachteilig.
Nachteilig sind außerdem die deutlich oberhalb Raumtemperatur liegenden Prozeßtemperaturen sowie die vielstufige Verfahrensführung mit dem Auftrag auf ein Zwischensubstrat, Zerkleinerung zu Pigmenten, Bereitung von Halbfabrikaten, sogenannten Pigmentpasten und Einarbeitung in die Farbmischung.
Aufgabe der vorliegenden Erfindung war es daher, diese Nachteile des Standes der Technik zu beseitigen.
Demgemäß wurde das eingangs beschriebene Verfahren zur Beschichtung von Substraten gefunden.
Die erfindungsgemäßen Beschichtungen können nach der Härtung spröde oder nicht-spröde sein. Nichtspröde im Sinne der Erfindung bedeutet hierbei im Unterschied zur DE-A 42 40 743, daß die ausgehärteten Beschichtungen mechanisch, beispielsweise durch Führung der beschichteten Unterlage über eine Umlenkrolle mit kleinem Durchmesser, nicht mehr von der Unterlage lösbar sind, ohne daß diese beschädigt wird. Besonders als lackartige Beschichtungen sind nicht-spröde Beschichtungen vorteilhaft.

Der Farbeindruck der erfindungsgemäßen Beschichtungen basiert auf der Ausbildung cholesterisch flüssigkristalliner Phasen.

Bei einer cholesterischen Phase bilden die Flüssigkristalle eine zu den Längsachsen ihrer Moleküle senkrecht stehende helixartige Überstruktur aus (H. Baessler, Festkörperprobleme XI, 1971).

Die cholesterische Phase hat bemerkenswerte optische Eigenschaften: eine hohe optische Rotation sowie einen ausgeprägten Zirkulardichroismus, der durch Selektivreflexion von zirkular polarisiertem Licht innerhalb der cholesterischen Schicht entsteht. Die je nach Blickwinkel unterschiedlich erscheinenden Farben sind abhängig von der Ganghöhe der helixartigen Über. struktur, die ihrerseits vom Verdrillungsvermögen der chiralen Komponente abhängt. Dabei kann die Ganghöhe insbesondere durch Änderung der Konzentration eines chiralen Dotierstoffes und damit der Wellenlängenbereich des selektiv reflektierten Lichtes einer cholesterischen Schicht variiert werden.

Besonders stabile Beschichtungen erhält man, wenn die flüssigkristallinen Monomeren $a_1$) und $a_2$) erfindungsgemäß zwei reaktive Gruppen, die einer Polymerisation zugänglich sind, enthalten. Auch die chirale Komponente c) enthält bevorzugt mindestens eine solche reaktive Gruppe, damit die Diffusion der Verbindungen und eine damit verbundene Veränderung des Farbeindrucks der Schichten unterbunden wird.

Unter Polymerisation ist dabei jede Art von Aufbaureaktionen von Polymeren zu verstehen, also Additionspolymerisationen als Kettenreaktionen, Additionspolymerisationenen als Stufenreaktionen sowie, wenngleich für Lackbeschichtungen weniger bevorzugt, Kondensationspolymerisationen.

Im erfindungsgemäßen Verfahren kann eine flüssigkristalline Verbindung, aber auch eine Mischung mehrerer dieser flüssigkristallinen Verbindungen eingesetzt werden. Geeignet sind prinzipiell alle cholesterischen Flüssigkristalle. Zudem kann die cholesterische Phase durch Dotieren eines nematischen Flüssigkristallsystems mit chiralen Dotierstoffen erzeugt werden. Vorzugsweise wird ein Gemisch von mehreren nematischen Flüssigkristallkomponenten mit einem chiralen Dotierstoff eingesetzt.

Erfindungsgemäß besonders geeignet sind daher die in den Schriften DE-A 44 08 170 und DE-A 44 08 171 beschriebenen polymerisierbaren flüssigkristallinen Verbindungen oder deren Mischungen.

Diese Verbindungen sind polymerisierbare nematisch flüssigkristalline Materialien, die allein oder in Mischungen mit anderen polymerisierbaren nematischen Flüssigkristallen breite nematische Phasenbereiche und Klärtemperaturen unterhalb 140°C aufweisen und die unterhalb von 140°C verarbeitet werden können.

Diese Verbindungen entsprechen vorzugsweise der allgemeinen Formel I,

$$Z^1-(Y^1-A^1)_v-Y^2-M-Y^3-(A^2-Y^4)_w-Z^2 \qquad \text{I}$$

besonders bevorzugt der allgemeinen Formel Ia

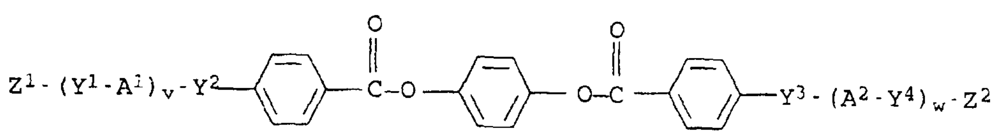

Ia

wobei jeder Ring bis zu drei gleiche oder verschiedene Substituenten aus der folgenden Gruppe tragen kann: $C_1$- bis $C_{20}$-Alkyl, $C_1$- bis $C_{20}$-Alkoxy, $C_1$- bis $C_{20}$-Alkoxycarbonyl, $C_1$- bis $C_{20}$-Mono-alkylaminocarbonyl, Formyl, $C_1$- bis $C_{20}$-Alkylcarbonyl, Fluor, Chlor, Brom, Cyan, $C_1$- bis $C_{20}$-Alkylcarbonyloxy, $C_1$- bis $C_{20}$-Alkylcarbonylamino, Hydroxy oder Nitro.

Von den genannten Resten sind Chlor, Brom, Cyan, Fluor, Hydroxy, Methyl, Ethyl, Methoxy, Ethoxy, Methoxycarbonyl, Formyl, Acetyl und Acetoxy sowie längerkettige Reste mit mindestens 8 C-Atomen bevorzugt.

In den Formeln I und Ia haben die Reste folgende Bedeutung:

| | |
|---|---|
| $Z^1$, $Z^2$ | reaktive Gruppen, über die eine Polymerisation herbeigeführt werden kann, oder Reste, die eine solche reaktive Gruppe enthalten, |
| $Y^1$, $Y^2$, $Y^3$, $Y^4$ | eine direkte Bindung, -O-, -S-, -CO-O-, -O-CO-, -O-CO-O-, $-NR^1$-CO-O-, -O-CO-$NR^1$- oder $-NR^1$-CO-$NR^1$-, |

$R^1$ $C_1$-$C_4$-Alkyl oder Wasserstoff,

$A^1$, $A^2$ Spacer und

V, W 0 oder 1

M eine mesogene Gruppe, welche bevorzugt die allgemeine Struktur der Formel II besitzt:

$$(T\text{-}Y^5)_m\text{-}T \qquad \text{II}$$

in der die Reste

T gleiche oder verschiedene zweiwertige isocycloaliphatische, heterocycloaliphatische, isoaromatische oder heteroaromatische Reste,

$Y^5$ gleiche oder verschiedene Brückenglieder -CO-O-, -O-CO-, -$CH_2O$-, -$OCH_2$-, -CO-S-, -S-CO-, -$CH_2$-S-, -S-$CH_2$-, -CH=N- oder -N=CH- oaer eine direkte Bindung und

m 1, 2, 3 oder 4 bedeuten.

Bevorzugte Gruppen $Z^1$ und $Z^2$ sind solche, die durch einen photochemischen Initiierungsschritt polymerisiert werden können, darunter vor allem die Vinylgruppe und die Isopropenylgruppe sowie daneben die 4-Vinylphenylgruppe und die I-Chlorethenylgruppe.

Weiterhin bevorzugte polymerisierbare Gruppen $Z^1$ und $Z^2$ sind solche, die einen Epoxid-, Cyanat- oder Isocyanatrest enthalten.

Verbindungen mit dem Cyanatrest sind besonders bevorzugt, weil sie bereits thermisch zu Cyanuraten reagieren. Enthalten sie zwei Cyanatgruppen, erhält man weitmaschige Netzwerke, wie sie für die Ausbildung stabiler flüssigkristalliner Schichten besonders vorteilhaft sind.

Epoxide und Isocyanate benötigen zur Polymerisation im Sinne einer Polyaddition weitere Verbindungen mit komplementären reaktiven Gruppen. So können beispielsweise Isocyanate mit Alkoholen zu Urethanen und mit Aminen zu Harnstoffderivaten reagieren. Analoges gilt für Epoxide. Die komplementären reaktiven Gruppen können dabei in einer zweiten Verbindung $a_1$) oder $a_2$) enthalten sein, welche mit der ersteren vermischt wird, oder sie können durch Hilfsverbindungen, die 2 oder mehr dieser komplementären Gruppen enthalten, in das Polymerisationsgemisch eingebracht werden.

Für $Y^1$, $Y^2$, $Y^3$ und $Y^4$ sind neben einer direkten Bindung insbesondere Ether- und Estergruppen sowie die Carbonatgruppe (-O-CO-O-) bevorzugt.

Als Spacer $A^1$ und $A^2$ können alle für diesen Zweck bekannten Gruppen dienen. Üblicherweise sind die Spacer über Ester-, Ether- oder Carbonatgruppen oder eine direkte Bindung mit $Z^1$ bzw. $Z^2$ verknüpft. Als Spacer kommen besonders Alkylengruppen mit 2 bis 30, vorzugsweise 2 bis 12 C-Atomen in Betracht, die in der Kette z.B. durch Sauerstoffe in Etherfunktion oder nicht benachbarte Imino- oder Methyliminogruppen unterbrochen sein können. Als Substituenten für die Spacerkette kommen dabei noch Fluor, Chlor, Brom, Cyan, Methyl oder Ethyl in Betracht. Repräsentative Spacer sind beispielsweise -$(CH_2)_p$-, -$(CH_2CH_2O)_q$-$CH_2CH_2$-, -$(CH_2CH_2S)_q$-$CH_2$-$CH_2$-, -$(CH_2CH_2NH)_q$-$CH_2CH_2$-,

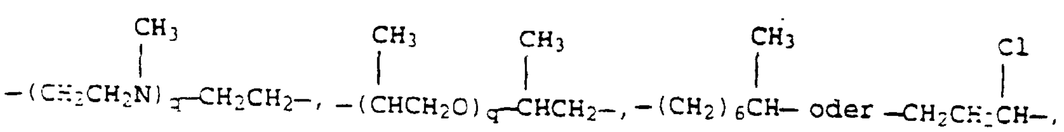

wobei q 1 bis 3 und p 2 bis 12 bedeuten.

Die Molekülteile mit den äußeren aromatischen Ringen der mesogenen Gruppe

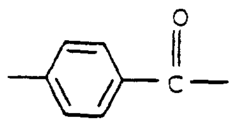 bzw. 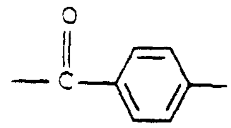

in den Verbindungen der Formel Ia haben unabhängig voneinander bevorzugt eine der folgenden Strukturen:

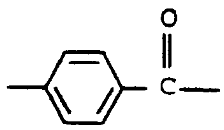, 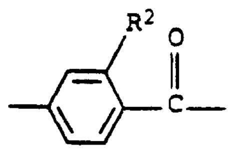, 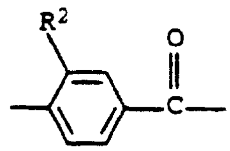,

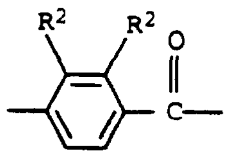, 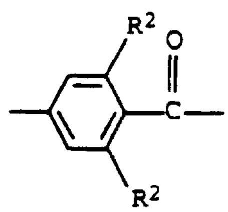, 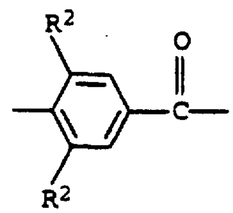

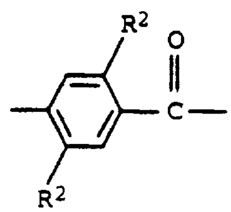

wobei $R^2$ F, Cl, Br, $C_1$-$C_{20}$-Alkyl, $C_1$-$C_{20}$-Alkoxy, $C_1$-$C_{20}$-Alkylcarbonyl, $C_1$-$C_{20}$-Alkylcarbonyloxy, CHO oder CN bedeutet und die Substituenten auch gemischt vorliegen können.

Der Molekülteil mit dem mittleren aromatischen Ring

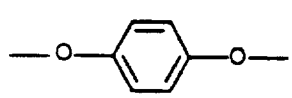

in Formel Ia hat vorzugsweise folgendes Substitutionsmuster:

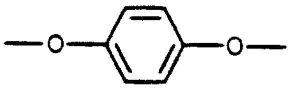 , 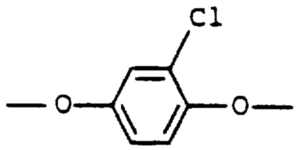 , 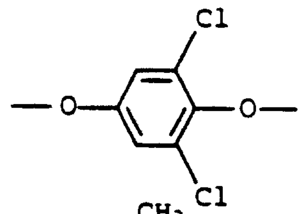 ,

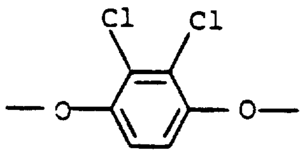 , 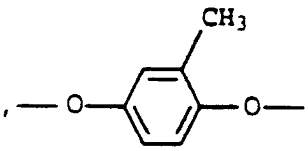 , 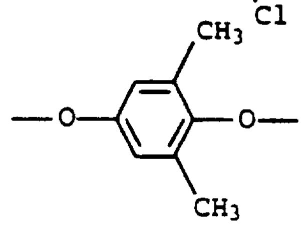 ,

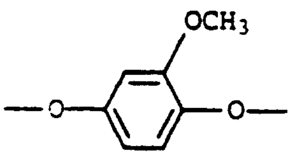 , 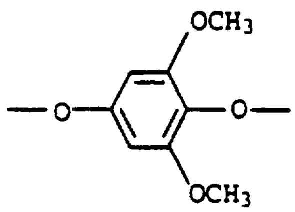 , 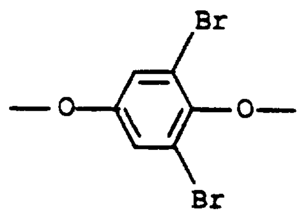 ,

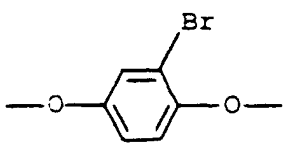 , 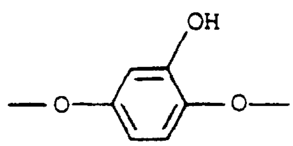 , 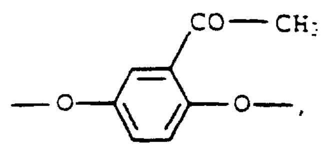 ,

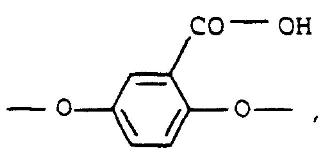 , 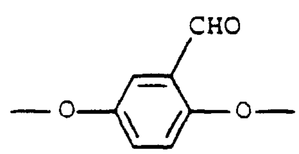 , 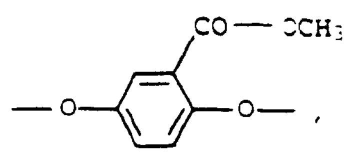 ,

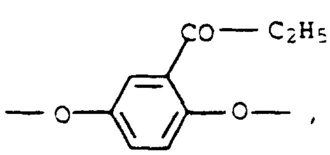 , 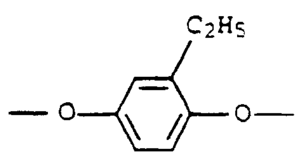 , 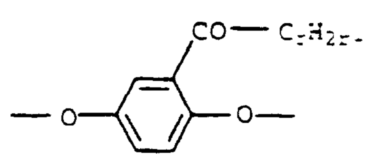 ,

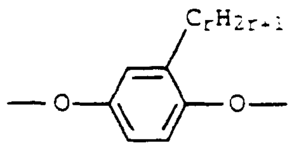 , 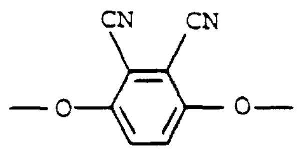 , 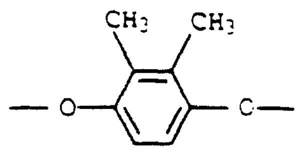 ,

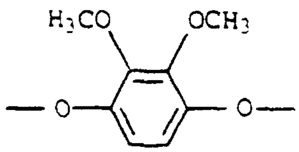 , 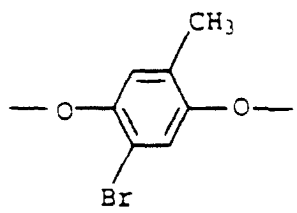 , 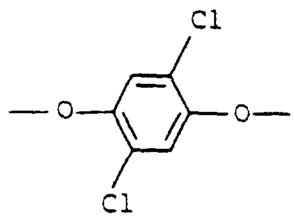

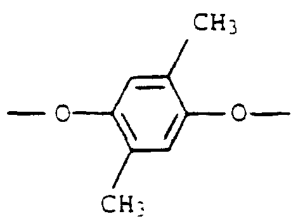 ,

wobei r 2 bis 20, vorzugsweise 8 bis 15 bedeutet.

Besonders gut eignen sich als Komponenten $a_2$) für die erfindungsgemäßen Beschichtungs- bzw. Bedrukkungsmittel Verbindungen der allgemeinen Formel I, bei denen mindestens eines der Restepaare $Z^1$ und $Z^2$, $Y^1$ und $Y^4$, $Y^2$ und $Y^3$, $A^1$ und $A^2$ aus zwei verschiedenen Resten besteht. Durch derartige unsymmetrische Verbindungen I oder la wird der flüssigkristalline Zustandsbereich der erfindungsgemäß eingesetzten Beschichtungsmittel deutlich erweitert.

Die Herstellung der erfindungsgemäßen Verbindungen erfolgt nach an sich bekannten Methoden. Im allgemeinen werden die Molekülteile $Z^1$, $Z^2$, $A^1$, $A^2$ und M durch Kondensationsreaktionen so miteinander verknüpft, daß dabei die Brückenglieder $Y^1$ bis $Y^4$ ausgebildet werden. Die Ausgangskomponenten werden dazu so ausgewählt, daß die entsprechenden Ester oder Amide entstehen. Bevorzugt werden Säurechloride mit Hydroxy- oder Aminoverbindungen zur Reaktion gebracht. Dieses Reaktionsprinzip gilt auch für den Aufbau der mesogenen Gruppe aus den entsprechenden Ringsystemkomponenten. Die Carbonatgruppe wird bevorzugt durch sukzessive Umsetzung Hydroxylgruppen tragender Molekülteile mit Phosgen gebildet. Weitere Details zur Herstellung der Verbindungen sind in den deutschen Offenlegungsschriften 44 05 316, 44 08 171 und 44 08 170 angegeben.

Die Verbindungen der Formel I und la weisen allein, in Mischungen untereinander oder mit anderen flüssigkristallinen Verbindungen flüssigkristalline Phasenstrukturen auf und lassen sich durch radikalische oder ionische Polymerisationsverfahren unter Beibehaltung ihrer flüssigkristallinen Ordnungsstruktur in hochvernetzte Polymere überführen.

Zur Einstellung gewünschter Eigenschaften der Mischungen kann es zweckmäßig sein, mehr als zwei Verbindungen der Formel I oder la oder auch Mischungen von Verbindungen I oder la mit anderen polymerisierbaren Flüssigkristallen zu verwenden.

Die Reste T können gegebenenfalls durch $C_1$- bis $C_{20}$-Alkyl, $C_1$- bis $C_{20}$-Alkoxy, $C_1$- bis $C_{20}$-Alkoxycarbonyl, $C_1$- bis $C_{20}$-Monoalkylaminocarbonyl, Formyl, $C_1$- bis $C_{20}$-Alkylcarbonyl, Fluor, Chlor, Brom, Cyan, $C_1$- bis $C_{20}$-Alkylcarbonyloxy, $C_1$- bis $C_{20}$-Alkylcarbonylamino, Hydroxy oder Nitro substituiert sein, wobei bei allen alkylgruppenenthaltenden Substituenten kurzkettige mit 1 bis 6 C-Atomen und langkettige mit 14 bis 20 C-Atomen bevorzugt sind. Besonders bevorzugte Substituenten sind Fluor, Chlor, Brom, Cyan, Hydroxy oder Nitro. Die Reste T entsprechen z.B. folgenden Grundstrukturen:

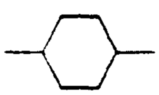, 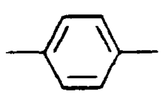, 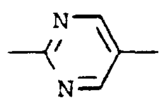, 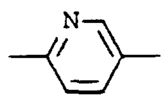, 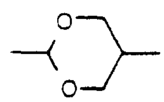,

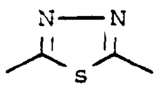, 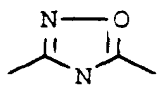, 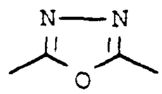, 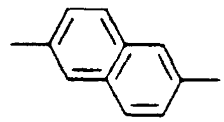,

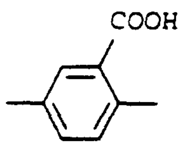, 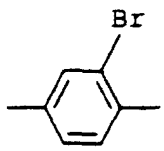, 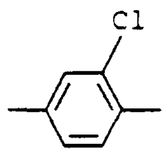, 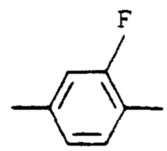,

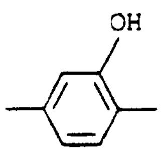, 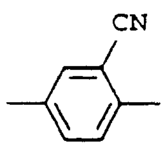, 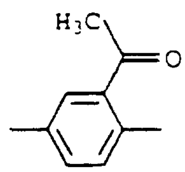, 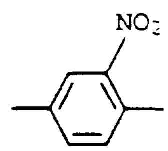,

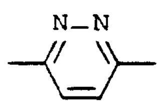 und 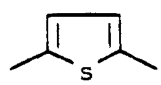

Besonders bevorzugt sind als mesogene Gruppen M:

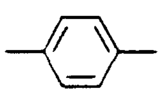, 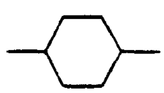, 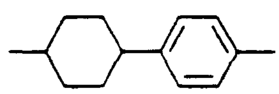, 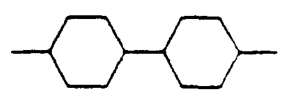,

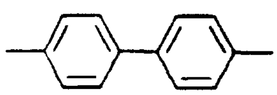, 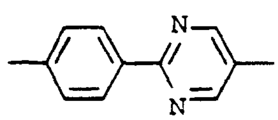, 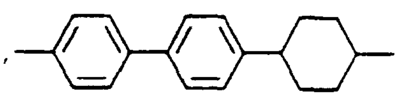,

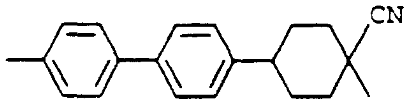 , 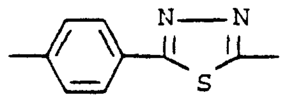 ,

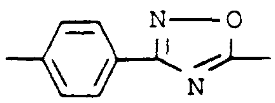 , 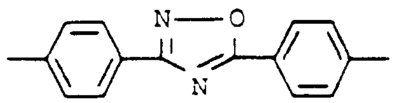 ,

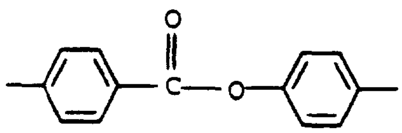 , 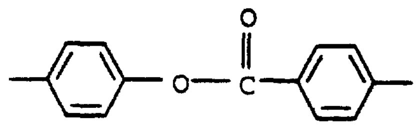 ,

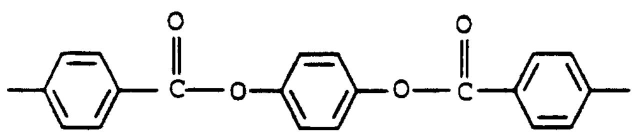 ,

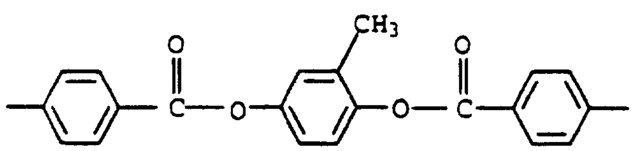 ,

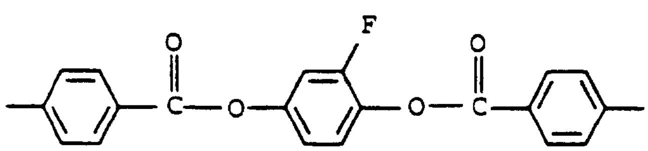 ,

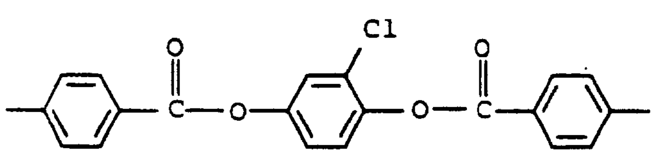 ,

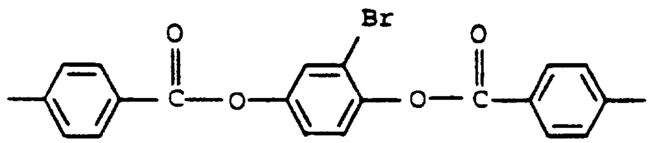
,

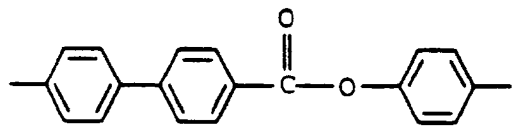
,

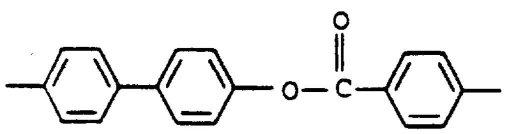
,
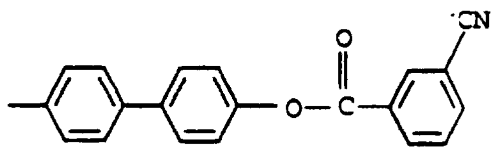
,

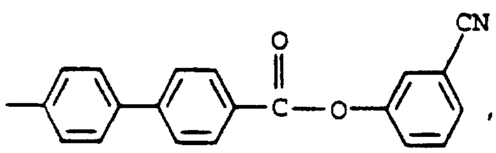
,
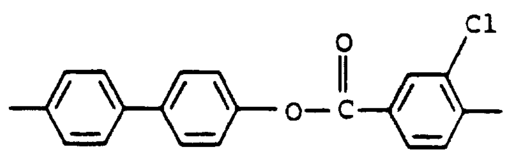
,

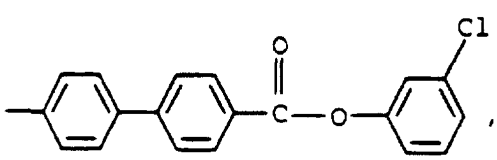
,
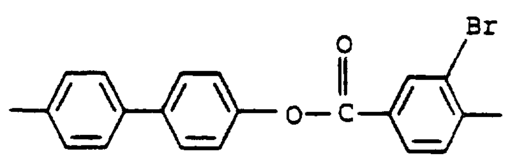
,

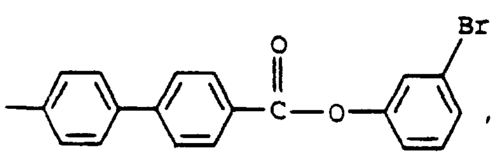
,
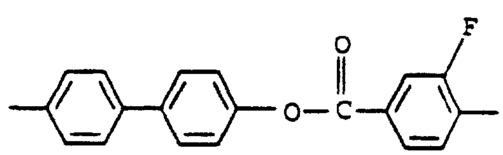
,

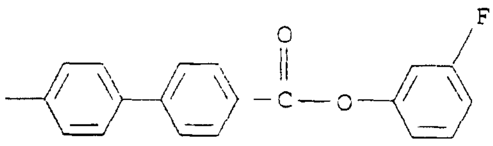 , 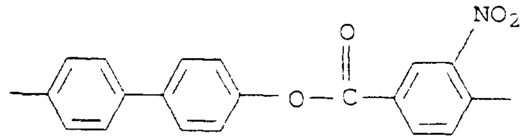 ,

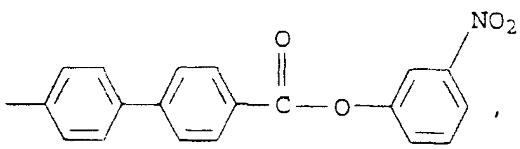 , 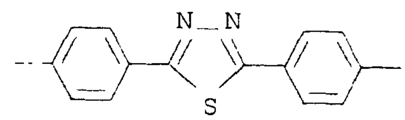 ,

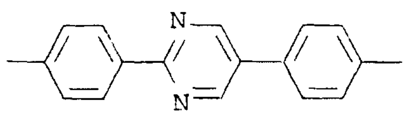 und 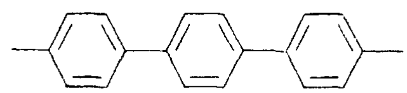 .

Weitere geeignete polymerisierbare, flüssigkristalline Verbindungen sind beispielsweise in DE-C 36 04 757, EP-A 0 358 208 sowie in D. J. Broer et al. in 14. Int. Liquid. Conf., Abstr. II, 921 (1992); H. Andersson, U.W. Gedde, A. Hult, Polymer, 1992, 33, 4014; R. A., U. Hickmet, S. Lub, J.A. Higgins, Polymer, 1993, Seiten 34 ff., 1836 ff. beschrieben.

Ein charakteristisches Merkmal der erfindungsgemäßen Beschichtung bzw. Bedruckung ist das Auftreten cholesterisch flüssigkristalliner Strukturen, welche den Farbeindruck bewirken. Sofern die flüssigkristalline Grundkomponente nicht selbst chiral ist, kann die Bildung einer cholesterischen Phase durch eine chirale Komponente c) hervorgerufen werden. Um einen stabilen cholesterisch flüssigkristallinen Lack, in dem die cholesterische Phase durch Vernetzung fixiert ist, zu erzeugen, enthält diese chirale Komponente vorzugsweise reaktive Gruppen, über die sie während des Härtungsprozesses mit den anderen polymerisierbaren Beschichtungsmittelbestandteilen verbunden werden kann. Die chiralen Verbindungen c) tragen vorzugsweise mindestens eine polymerisierbare Gruppe, mindestens einen Spacer und mindestens eine mesogene Gruppe. Auf Grund der Ähnlichkeit mit der flüssigkristallinen Komponente $a_1$) bzw. $a_2$) eignen sich solche chiralen Verbindungen besonders gut als Dotierstoffe zur Erzeugung cholesterischer Flüssigkristallphasen: derartige Verbindungen besitzen ausgezeichnetes Löslichkeits- bzw. Mischbarkeitsverhalten und meist hohes Verdrillungsvermögen. Beispiele solcher chiraler Komponenten sind in der deutschen Offenlegungsschrift 43 42 280 beschrieben. Die chiralen Verbindungen entsprechen vorzugsweise der Formel

$$(Z^1\text{-}Y^1\text{-}A^1\text{-}Y^2\text{-}M\text{-}Y^3)_nX \qquad \text{III,}$$

in der die Reste $Z^1$, $Y^1$, $Y^2$, $Y^3$, $A^1$ und M die obengenannte Bedeutung haben:

- n 2 bis 6, vorzugsweise 2 oder 3, und
- x einen chiralen Rest bedeutet

Dabei können die Reste $A^1$, M, $Y^1$, $Y^2$, $Y^3$ und $Z^1$, da sie n-mal in III enthalten sind, gleich oder verschieden sein.

Besonders vorteilhaft sind Verbindungen III, die als mesogene Gruppen M Reste der Formel IIa

$$(T\text{-}Y^5)_s\text{-}T \qquad \text{IIa}$$

enthalten, wobei

s 0 bis 3, vorzugsweise 0 oder 1 und

$Y^5$ die oben definierten Brückenglieder bedeuten.

Von den chiralen Resten X der Verbindungen der allgemeinen Formel III sind u.a. aufgrund der Verfügbarkeit insbesondere solche bevorzugt, die sich von Zuckern, Binaphthyl- oder Biphenylderivaten sowie optisch aktiven Glykolen, Dialkoholen oder Aminosäuren ableiten. Bei den Zuckern sind insbesondere Pentosen und Hexosen und davon abgeleitete Derivate zu nennen.

Beispiele für Reste X sind die folgenden Strukturen, wobei die endständigen Striche jeweils die freien Valenzen bedeuten.

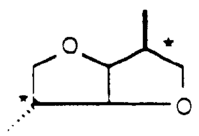
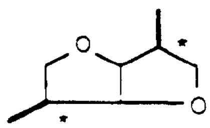
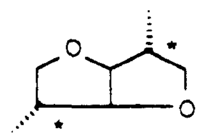

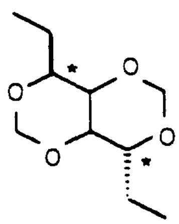
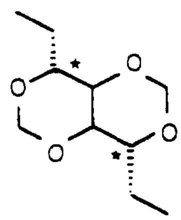

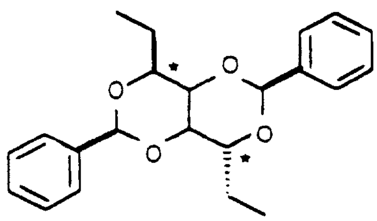
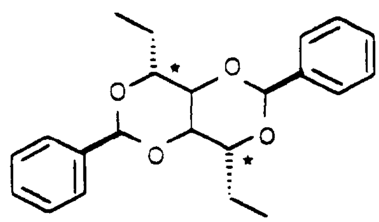

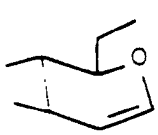
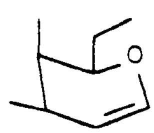
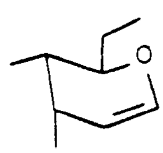
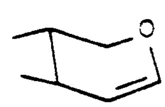

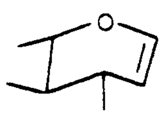
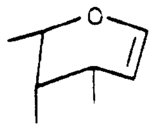
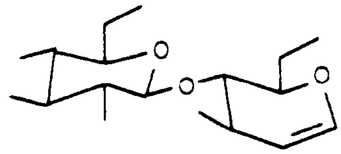

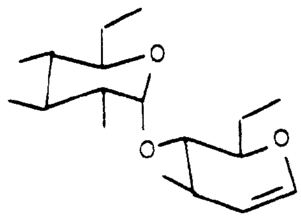
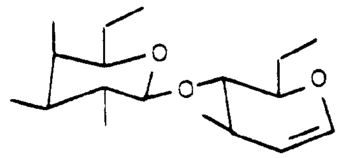

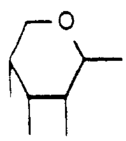
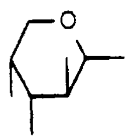
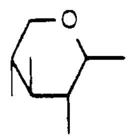
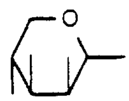

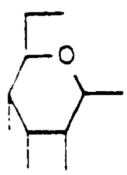
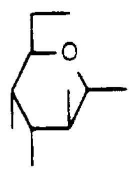
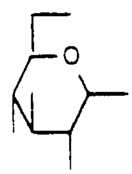
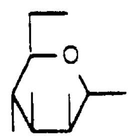

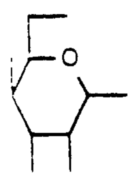
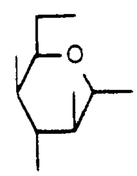
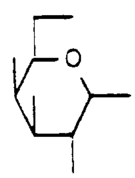
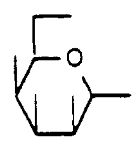

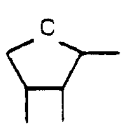
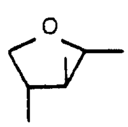
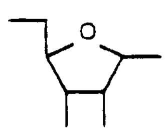
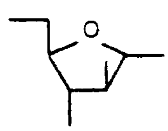
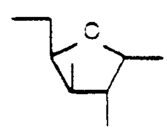

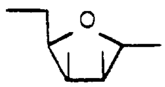 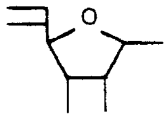 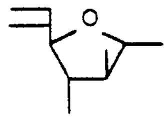 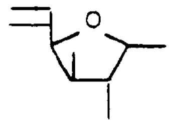 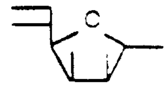

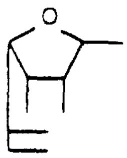 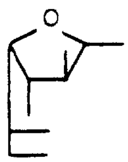 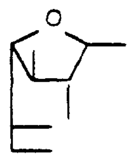 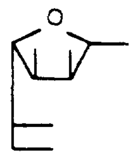

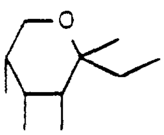 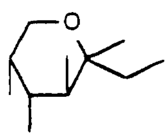 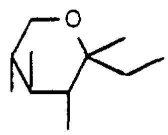 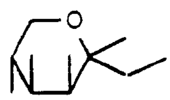 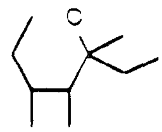

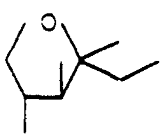 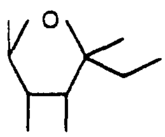 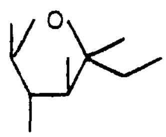 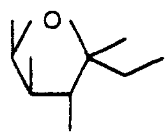 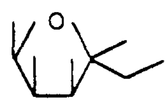

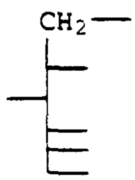 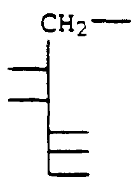 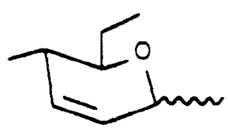 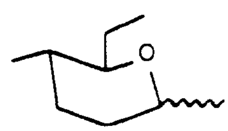

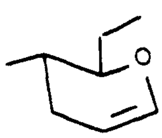 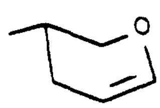 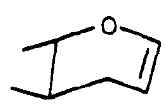 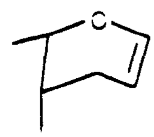

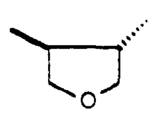

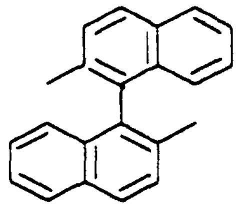 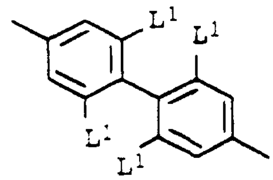

wobei

$L^1$ $C_1$- bis $C_4$-Alkyl, $C_1$-$C_4$-Alkoxy, Halogen, $COOR^2$, $OCOR^2$, $CONHR^2$ oder $NHCOR^2$ ist und $R^2$ ein Rest der Definition von $R^1$ ist.

Besonders bevorzugt sind

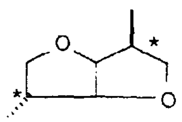 , 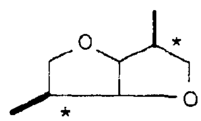 , 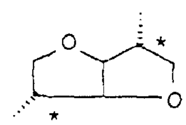 ,

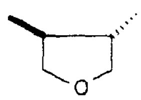 , 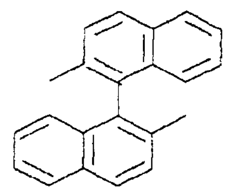 oder 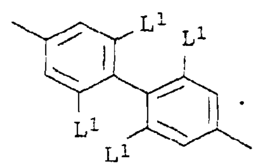 .

Weiterhin sind auch chirale Gruppen geeignet, die folgende Strukturen aufweisen:

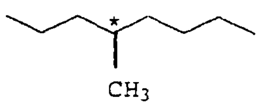 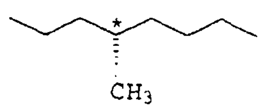 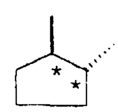

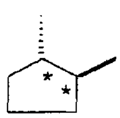 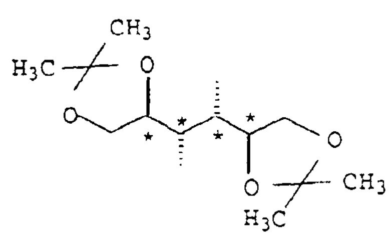

Weitere Beispiele sind in der deutschen Offenlegungsschrift 43 42 280 aufgeführt.

Flüssigkristalle mit verdrillten cholesterischen Phasen zeigen ihre besonderen optischen Eigenschaften erst dann, wenn große Bereiche der Phase einheitliche Orientierung aufweisen. Die bekannten Methoden, um diese Orientierung zu erreichen, sind z.B. die Wechselwirkung der Flüssigkristallphase mit Orientierungsschichten, das Anlegen elektrischer oder magnetischer Felder oder das mechanische Rakeln der Flüssigkristallschichten. Diese Orientierungsmethoden erfordern spezielle technische Vorrichtungen, welche die Anwendung auf einfache Substrate wie Folien

oder andere gleichförmige Oberflächen beschränkt.

Ein besonderer Vorteil des erfindungsgemäßen Verfahrens besteht nun in der Möglichkeit, die Beschichtung direkt auf das gewünschte Substrat und damit auch auf komplex geformte große Oberflächen aufzubringen. Diese Möglichkeit wird erfindungsgemäß dadurch erreicht, daß die flüssigkristallinen Verbindungen $a_1$) und $a_2$) und gegebenenfalls die chiralen Verbindungen c) mit einer Komponente b) vermischt werden, welche die Mischbarkeit der Komponenten untereinander und besonders die Viskosität und das Verlaufverhalten der Beschichtungs- bzw. Bedruckungsmittel positiv beeinflußt. Diese Komponente b) ermöglicht die spontane Orientierung der flüssigkristallinen Phasen bei niedrigen Temperaturen ohne komplizierte technische Orientierungsmethoden während des Auftragungsvorgangs selbst, also beim Spritzen, Rollcoaten, Tauchen, Auftragen mit Hilfe eines Gießspaltes oder den verschiedenen Druckverfahren.

Aufgrund der unterschiedlichen Auftragstechniken sowie auch unterschiedlicher Anforderungen an die fertige Beschichtung werden für Lackierungsverfahren andere Mittel als für Druckverfahren und für Dispersionsfarben bevorzugt.

Besonders geeignet für lackartige Beschichtungen sind als Komponente b) polymere Bindemittel und/oder monomere Verbindungen, die durch Polymerisation in ein polymeres Bindemittel überführt werden können. Als solche Mittel eignen sich z.B. in organischen Lösungsmitteln lösliche Polyester, Celluloseester, Polyurethane, Silikone, polyether- oder polyestermodifizierte Silikone. Besonders bevorzugt werden Celluloseester wie Celluloseacetobutyrat eingesetzt.

Eine Reaktionslackmischung enthält besonders bevorzugt solche polymeren Bindemittel, die reaktive vernetzungsfähige Gruppen wie Acryl-, Methacryl-, α-Chloracryl-, Vinyl-, Vinylether-, Epoxid-, Cyanat-, Isocyanat- oder Isothiocyanatgruppen enthalten. Auch monomere Mittel eignen sich als Komponente b), besonders die in der Lackherstellung bekannten sogenannten Reaktivverdünner, wie beispielsweise Hexandioldiacrylat oder Bisphenol-A-diacrylat. Schon geringe Mengen solcher Substanzen - meist schon 0,1 bis 1 Gew.-% - bewirken eine beträchtliche Verbesserung der Fließviskosität und ermöglichen so das Auftragen dünner, homogener Lackschichten, in denen sich die cholesterischen Flüssigkristallmischungen spontan orientieren können. Gleichzeitig haben diese Mittel einen großen Einfluß auf die mechanischen Eigenschaften der gehärteten Lackschicht. Durch Variation der Konzentration sowie durch die Auswahl der Bindemittel lassen sich sowohl das Verlaufverhalten als auch die Elastizität des Lackes unschwer im geflanschten Sinne einstellen.

Als Reaktionslacke geeignete Mischungen können als weitere Komponente ein Lösungs- oder Verdünnungsmittel enthalten. Als Lösungs- oder Verdünnungsmittel kommen beispielsweise Ester, besonders Essigsäureester, Alkohole, Lactone, aliphatische und aromatische Kohlenwasserstoffe, Amide, N-Alkylpyrrolidone, besonders N-Methylpyrrolidon sowie Tetrahydrofuran und Dioxan in Betracht.

Eine besonders bevorzugte Reaktionslackmischung ist ein lösungsmittelfreier bzw. lösungsmittelarmer Lack mit Wasser als Verdünnungsmittel.

Vorteilhaft für eine stabile Oberflächenbeschichtung ist der Zusatz von Adhäsionshilfsmitteln zu dem erfindungsgemäßen Lack. Geeignete Adhäsionshilfsmittel sind beispielsweise Silane oder Verbindungen der Struktur

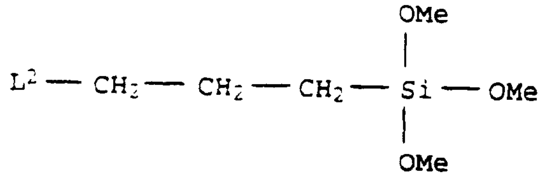

wobei $L^2$ eine Hydroxylgruppe, eine Isocyanatgruppe oder einen vernetzbaren Rest, z.B. eine Acrylat- oder Epoxygruppe, bedeutet, oder wobei $L^2$ eine solche Gruppe trägt.

Weiterhin können dem Lack Polymerisationsinitiatoren zugesetzt werden, die entweder thermisch oder photochemisch zerfallen und so die Härtung des Lacks bewirken. Dabei sind unter den thermischen Polymerisationsinitiatoren solche bevorzugt, die zwischen 20 und 180°C, besonders bevorzugt zwischen 50 und 80°C zerfallen und die Polymerisation initiieren. Zur photochemischen Härtung sind im Prinzip alle Photoinitiatoren verwendbar. Insbesondere kommen auch Gemische verschiedener Initiatoren zum Einsatz, um die Durchhärtung zu verbessern. Als gut geeignete Photoinitiatoren kommen z.B. Benzophenon und dessen Derivate, wie Alkylbenzophenone, halogenmethylierte Benzophenone oder 4,4'-Bis(dimethylamizol-benzophenon sowie Benzoin und Benzoinether wie Ethylbenzoinether, Benzilketale wie Benzildimethylketal, Acetophenonderivate, wie Hydroxy-2-methyl-1-phenylpropan-1-on und Hydroxycyclohexylphenylketon zum Einsatz. Ganz besonders gut geeignet sind Acylphosphinoxide wie 2,4,6-Trimethylbenzoyldiphenylphosphinoxid. Unter den photochemisch aktivierbaren Polymerisationsinitiatoren werden bevorzugt solche eingesetzt, die keine vergilbende Wirkung zeigen.

Besonders bevorzugte Polymerisationsinitiatoren sind Boralkylverbindungen sowie Peroxide wie Dibenzoylperoxid und Di-tert.-butyl-peroxid.

Die Photoinitiatoren, die je nach Verwendungszweck der erfindungsgemäßen Beschichtungen in Mengen zwischen 0,01 und 15 Gew.-%, bezogen auf die polymerisierbaren Komponenten, eingesetzt werden, können als einzelne Substanzen oder, wegen vorteilhafter synergistischer Effekte, auch in Kombination miteinander, verwendet werden.

Für kationische Polymerisationen werden bevorzugt Initiatoren eingesetzt, welche geladene Strukturen aufweisen. Insbesondere kommen Substanzen zum Einsatz, welche, z.T. in Kombination mit Acylphosphinoxiden eingesetzt werden, z.B.:

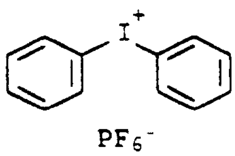

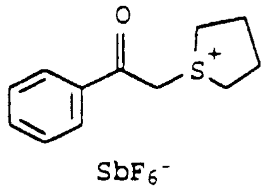

sowie Derivate dieser Verbindungen.

Gewünschtenfalls können den Lacken auch Stabilisatoren gegen UV- und Wettereinflüsse zugesetzt werden. Hierfür eignen sich z.B. Derivate des 2,4-Dihydroxybenzophenons, Derivate des 2-Cyan-3,3-diphenylacrylates, Derivate des 2,2',4,4'-Tetrahydroxybenzophenons, Derivate des Orthohydroxyphenylbenztriazols, Salicylsäureester, Orthohydroxyphenyl-S-triazine oder sterisch gehinderte Amine. Diese Stoffe können allein oder vorzugsweise in Form von Gemischen eingesetzt werden.

Auch Pigmente, Farbstoffe und Füllstoffe können den Lacksystemen zugesetzt werden.

Anorganische Pigmente sind beispielsweise Eisenoxide, Titandioxid und die verschiedenen Arten von Ruß.

Organische Pigmente sind beispielsweise solche aus der Klasse der Monoazopigmente (z.B. Produkte, die sich von Acetessigarylidderivaten oder von β-Naphtholderivaten ableiten), Monoazofarbstoffe und deren Metallsalze, wie β-Oxynaphthoesäurefarbstoffe, Disazopigmente, kondensierte Disazopigmente, Isoindolinderivate, Derivate der Naphthalin- oder Perylentetracarbonsäure, Anthrachinonpigmente, Thioindigoderivate, Azomethinderivate, Chinacridone, Dioxazine, Pyrazolochinazolone, Phthalocyaninpigmente oder basische Farbstoffe wie Triarylmethanfarbstoffe und deren Salze.

Als weitere Pigmente kommen Effektgeber wie Aluminiumpartikel, Glimmer oder beschichteter Glimmer, Micas oder die marktüblichen plättchenförmigen Effektpigmente mit verschiedener chemischer Struktur in Betracht.

Als Füllstoffe kommen z.B. Rutil, Anatas, Kreide, Talkum und Bariumsulfat in Betracht.

Als zusätzliche Farbstoffe sind alle geeignet, welche sich zumindest in einer Konzentration von 0,1 mol-% in dem Beschichtungsmittel lösen. Ganz besonders gut geeignet sind dichroitische Farbstoffe. Der Anteil der Pigmente, Farbstoffe oder Füllstoffe beträgt im allgemeinen insgesamt bis zu 40, vorzugsweise bis 10 Gew.-%, bezogen auf die Masse der flüssigkristallinen Verbindungen.

Die Lacke haben zahlreiche Vorteile. So weisen die erfindungsgemäß beschichteten Substrate eine hohe Oberfläzhengüte und einen verbesserten Farbeindruck im Vergleich zu Systemen auf, die aus polymeren oder oligomeren cholesterischen Flüssigkristallpigmenten hergestellt wurden.

Beispielsweise erscheint ein erfindungsgemäß lackiertes Fahrzeug dem Betrachter unter verschiedenen Blickwinkeln in verschiedenen Farben, wobei durch die hohe Oberflächengüte ein hoher Schutz der Karosserie gegenüber Korrosion oder mechanischen Beschädigungen sowie ein hoher Glanz gegeben ist. Dies kann durch Auftrag eines Klarlackes noch verbessert werden.

Durch die Helixstruktur der polymerfixierten cholesterisch flüssigkristallinen Phase wird ein Teil des auf die Oberfläche treffenden Lichts richtungsabhängig mit verschiedenen Wellenlängen reflektiert. Die Intensität dieses Farbeindrucks kann noch verstärkt werden, indem mindestens zwei erfindungsgemäße Lackschichten mit gleicher Selektivreflexionswellenlänge, jedoch entgegengesetzter Helixgängigkeit übereinander aufgetragen werden. Dies wird z.B. dadurch erreicht, daß die Lackschichten als chirale Komponente jeweils Verbindungen enthalten, deren Helixdrehsinn entgegengesetzt und von ähnlicher Größe ist.

Weitere interessante Farbeffekte erreicht man durch schichtweisen Auftrag mehrerer Lackschichten übereinander, wobei sich die Schichten in ihrer Selektivreflexionswellenlänge unterscheiden.

Auf diese Weise kann eine noch größere Zahl von betrachtungswinkelabhängigen Farbtönen erzeugt werden.

Bevorzugt sind weiterhin Beschichtungsverfahren, bei denen die Auftragung und anschließende Härtung bei

Temperaturen von 10 bis 130-C, besonders bevorzugt bei 20 bis 80°C erfolgt.

In einer weiteren bevorzugten Ausführungsform des erfindungsgemäßen Verfahrens wird die oberflächliche Beschichtung mittels eines Druckverfahrens vorgenommen.

Hierbei lassen sich alle üblichen Druckverfahren (z.B. Hoch-, Tief-, Flexo-, Offset-, Siebdruck) anwenden. Auch hierbei findet eine spontane Orientierung der Flüssigkristalle durch den Auftragsvorgang selbst statt.

Druckverfahren im Sinne der Erfindung sind auch solche, bei denen das Beschichtungsmittel beispielsweise durch Anwendung eines Kugelschreibers oder Füllfederhalters auf ein Substrat wie Papier oder Kunststoff aufgetragen wird.

Da man den Reflexionsbereich vom infraroten bis zum ultravioletten Licht einstellen kann, lassen sich mit den erfindungsgemäßen Druckfarben auch für das menschliche Auge unsichtbare Markierungen und Sicherheitsmarken erzeugen. Sie können anhand der Zirkularpolarisation oder Winkelabhängigkeit detektiert werden.

Da bei Druckverfahren andere Voraussetzungen an die mechanischen Eigenschaften der Beschichtung sowie an das zur Verarbeitung erforderliche Verlaufsverhalten gestellt werden, werden für diese Verfahren andere Zusammensetzungen bevorzugt. Als Komponenten $a_1$), $a_2$) und c) kommen die gleichen Verbindungen in Betracht, wie sie für Lackierungsverfahren verwendet werden. Statt der Komponente b) werden dagegen bevorzugt als Komponente d) Dispergierhilfsmittel eingesetzt. Diese Dispergierhilfsmittel vermitteln eine besonders gute Mischbarkeit aller Komponenten der Druckpaste sowie einen besonders gleichmäßigen Auftrag auf das Substrat. Gleichzeitig dient das Dispergierhilfsmittel zur Einstellung der gewüschten Fließviskosität, sodaß wie bei den Lacken eine spontane Orientierung der cholesterischen Flüssigkristalle auftritt. Durch die Verwendung eines Dispergiermittels kann auf die bei Druckverfahren üblichen Lösungsmittel wie Cyclohexan, Tetrahydrofuran, Toluol, Xylol, Styrol oder Acrylester meist vollkommen verzichtet werden.

Neben der Viskosität beeinträchtigt auch die hohe Oberflächenspannung der cholesterischen Flüssigkristallsysteme das Druckverhalten. Sie führt im Druck leicht zur Strukturbildung und Benetzungsproblemen, was sich in ungleichmäßigen, rauhen Druckschichten äußert.

Auch diese hinderliche Eigenschaft kann durch Zumischungen von Dispergierhilfsmitteln, sogenannten Hyperdispersants, positiv beeinflußt werden, ohne daß die optischen Eigenschaften der cholesterischen Flüssigkristallphasen darunter leiden. Insbesondere Hyperdispersants vom Typ der Alkenyl- oder Alkylbernsteinsäurederivate eignen sich gut für diese Zwecke und führen neben einer besseren Verarbeitbarkeit sogar zu einer Verstärkung des farbigen Interferenzeffektes.

Besonders geeignete Dispergierhilfsmittel sind Verbindungen der allgemeinen Formel IVa bis IVc

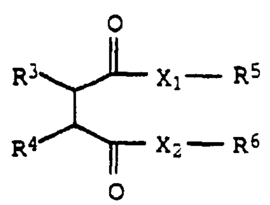

IVa

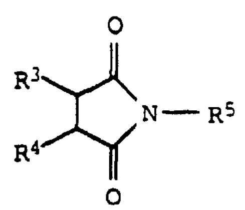

IVb

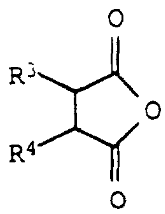

IVc

in der die Variablen die folgende Bedeutung haben:

$X_1$, $X_2$ Sauerstoff, NH, $NR^5$ oder $NR^6$,

$R^3$, $R^4$ Wasserstoff oder ein aliphatischer Rest mit einem Molekulargewicht bis 5000, wobei einer der Reste $R^3$ oder $R^4$ Wasserstoff bedeutet,

$R^5$,$R^6$ Wasserstoff oder ein aliphatischer oder aromatischer Rest mit einem Molekulargewicht bis 50000,

wobei, wenn $X_1$ und/oder $X_2$ Sauerstoff Sauerstoff bedeutet, $R^5$ und/oder $R^6$ auch ein einwertiges Kation oder das Äquivalent eines zweiwertigen Kations sein kann.

Als Dispergierhilfsmittel IVa bis IVc werden im allgemeinen handesübliche Verbindungen oder deren Mischungen eingesetzt. Diese Verbindungen werden durch Umsetzung von Fumar- oder Maleinsäurederivaten mit Olefinen erhalten. Bevorzugt sind Reste $R^3$ bzw. $R^4$, die sich von folgenden Olefinen ableiten:

Olefine mit 8 bis 40 Kohlenstoffatomen, welche bevorzugt eine endständige Doppelbindung tragen, Oligooder Polyolefine, welche sich von Monoolefinen mit 2 bis 30 Kohlenstoffatomen ableiten und z.B. mit Chlor substituiert sein können und ein mittleres Molekulargewicht von 100 bis 5000, bevorzugt von 500 bis 2000, aufweisen. Besonders bevorzugte Reste $R^1$ und $R^4$ leiten sich von Diisobuten, Dibutadien, Polyisobutylen mit 3 bis 90 Isobutyleneinheiten, Polypropylen mit 3 bis 120 Propyleneinheiten, Polyethylen mit 4 bis 180 Ethyleneinheiten und Polybutadien mit 3 bis 90 Butadieneinheiten ab, wobei ein Polyisobutylen mit 3 bis 40 Isobutyleneinheiten besonders hervorzuheben ist.

Die Verbindungen IVa bis IVc werden im allgemeinen als herstellungsbedingte Gemische eingesetzt. Bei der Herstellung können auch Verbindungen anfallen, die mehr als ein Bernsteinsäurederivat enthalten, z.B. beim Einsatz mehrfach ungesättigter Olefine. Auch diese Verbindungen sind wirksame Bestandteile der Dispergierungshilfsmittelmischungen.

Die Molekülteile $X_1R^5$, $X_2R^6$ und $NR^5$ werden durch Umsetzung von reaktiven Bernsteinsäure-, Maleinsäureoder Fumarsäurederivaten, wie Anhydriden oder Säurechloriden, in die Verbindungen IVa und IVb eingeführt. Die Umsetzung erfolgt mit den entsprechenden Alkoholen oder primären oder sekundären Aminen.

Als Amine kommen für diese Umsetzung in Betracht:
aliphatische, cycloaliphatische und aromatische, primäre und sekundäre Mono- und Polyamine, heterocyclische Monound Polyamine, Alkylenpolyamine und Polyalkylenpolyamine, verzweigte Polyalkylenamine, Etheramine, Polyetheramine, Oxyalkylendiamine, Polyoxyalkylendiamine, Polyoxyalkylenpolyamine, hydroxyalkyl- und polyalkylenglykolether-substituierte Amine, Aminosulfonsäuren, Aminocarbonsauren, Aminophosphonsäuren, Aminophosphonsäureester sowie Amine, die tertiare oder quartare Aminofunktionen enthalten.

Bevorzugt werden als Aminkomponenten N,N-Dimethyl-1,3-diaminopropan, N,N-Dimethyl-dipropylentetramin, Diethylentetramin, Triethylentetramin oder Bis-(β-aminopropyl)-1,2-diaminoethan eingesetzt.

Als Alkohole kommen für die Umsetzung in Betracht:
einwertige und mehrwertige Alkohole, Dialkohole, Trialkohole, Etheralkohole, Polyalkylenglykolether, Alkylenoxidaddukte an Alkohole und Phenole, Hydroxyalkyl-Heterocyclen, Hydroxyalkyl-Aromaten, Hydroxycarbonsauren, Hydroxysulfonsäuren, Hydroxyphosphonsäuren, Polyalkohole oder Alkohole, die tertiäre oder quartäre Aminofunktionen enthalten.

Als Salze der Bernsteinsäurederivate kommen besonders die Ammoniumsalze, darunter bevorzugt die quartären Ammoniumsalze, sowie Natrium-, Kalium- und Calciumsalze in Betracht.

Da polymerisierbare Druckfarben im allgemeinen photochemisch gehaftet werden, wird der cholesterisch flüssigkristallinen Mischung neben den beschriebenen Verbindungen vorzugsweise ein Photoinitiator zugesetzt. Als Photoinitiatoren eignen sich alle handelsüblichen Produkte, z.B. die für die Lackmischungen beschriebenen Verbindungen.

Zur Vermischung der flüssigkristallinen Druckpaste mit dem Dispergierhilfsmittel-Additiv und anschließendem Verdrucken geht man i.a. so vor, daß dem pastösen Flüssigkristallmaterial zunächst das Additiv und dann der Photoinitiator zugesetzt wird. Die Zugabe des Photoinitiators erfolgt zweckmäßigerweise in Form einer ca. 2.0 %igen Lösung

des Photoinitiators in einem organischen Lösemittel, das zweckmäßigerweise unter leichtem Erwarmen des Flüssigkristall-Materials homogen eingerührt wird. Das Additiv oder gewünschtenfalls eine Additivkombination und der Photoinitiator können aber auch gleichzeitig eingerührt werden. Bei UV-Lichtempfindlichkeit des Photoinitiators sollte unter Gelblicht gearbeitet werden. Bei Offsetdruckmaschinen mit variablem Farbauftrag wird eine möglichst hohe Filmdicke des Drucks eingestellt. Während und unmittelbar nach dem Druckvorgang wird bei sauerstoffempfindlichen Flüssigkristallverbindungen mit einem Inertgas gespült und nach einer Verweilzeit, die stoffabhängig zwischen 0,01 und 10 Minuten liegen kann, durch Lichteinstrahlung vernetzt. Die Aushärtung mit Licht der entsprechenden Wellenlänge kann je nach Intensität der Bestrahlung zwischen wenigen Sekunden bis zu mehreren Minuten dauern. Danach ist der flüssigkristalline Film trocken und zeigt das gewünschte optische Verhalten.

Die winkelabhängigen Farbänderungen sind besonders eindrucksvoll, wenn der flüssigkristalline Film auf schwarzem Grund, d.h. auf ein nicht selektiv absorbierendes Substrat appliziert wird. Interessante Varianten lassen sich auch mit selektiv absorbierenden Substraten bzw. über Zumischungen von Ruß oder von Farbpigmenten zum Flüssigkristallmaterial erzielen.

Das Anwendungsgebiet für Flüssigkristalldrucke liegt besonders im dekorativen Bereich und im Gebiet der Markierung von Banknoten und ähnlichen Papieren, die gegen Fälschung geschützt werden sollen. Es umfaßt Drucke aller Art, wobei das Bedrucken von Substraten wie Papier, Karton, Leder, Folien, Zellglas, Textilien, Kunststoffen, Glas, Keramik und Metallen möglich ist. Dabei konnen die verschiedensten Drucktechniken verwendet werden, z.B. Siebdruck, Flexodruck, Offsetdruck, Ink-Jet-Druck, Tiefdruck, Buchdruck, Tampondruck, Heißsiegeldruck und andere Transferdruckmethoden. Auch die Auftragung mit Hilfe eines Gießspaltes ist möglich, wodurch sehr dünne, gleichmäßige Schichten erhalten werden können. Auch Rasterwalzen mit Kammerrakel (modifiziertes Lackwerk) oder herkömmliche Lackierwerke können für den Druck verwendet werden. Die Substrate können schwarz, bunt oder weiß eingefärbt oder pigmentiert sein und Profile oder vorgedruckte Muster jeglicher Art aufweisen. Die Flüssigkristall-Beschichtung verleiht dem bedruckten Gegenstand stets einen besonders interessant erscheinenden blickwinkelabhängigen Farbton, d.h. einen mit dem Blickwinkel sich ändernden Farbton, dessen Intensität von dem optischen Absorptionsvermögen des Substrats abhängt.

Eine interessante Ausführungsform des erfindungsgemäßen Verfahrens besteht in der Herstellung von Pigmenten durch Offsetdruck. Durch diese Drucktechnik ist es möglich, eine cholesterisch flüssigkristalline Druckpaste als identisch dimensionierte Punkte auf ein Substrat, beispielsweise eine Folie oder ein Blech aufzutragen und zu härten. Die entstehenden Pigmentpartikel haben nahezu identische Form und Größe, welche sich durch Variation der Druckparameter sehr genau einstellen läßt. Bei geeigneter Vorbehandlung des Substrates mit einem die Haftung vermindernden Mittel lassen sich die Pigmente dann leicht von dem Substrat entfernen und wie üblich als Farbpigmente weiter verwenden. Diese Pigmente lassen sich durch ihre enge Größenverteilung sehr gut in Lacksysteme einarbeiten und liefern im Gegensatz zu den in der DE-A 42 40 743 beschriebenen Pigmente Lackoberflächen ohne Rauhigkeit und von hoher Oberflächengüte.

Die erfindungsgemäßen Mischungen lassen sich besonders vorteilhaft in Form wäßriger Dispersionen auf die Substrate aufbringen. Derartige Dispersionen enthalten neben den flüssigkristallinen und den chiralen Verbindungen die üblichen Bindemittel und gewunschtenfalls weitere Hilfsmittel, z.B. Lichtschutzmittel und Konservierungsmittel, Pigmente und lösliche Farbstoffe. Der Flüssigkristallgehalt dieser Dispersionen, die sich als Farben für Innen- und Außenanstriche eignen, beträgt im allgemeinen zwischen 20 und 95 Gew.-%.

Von besonderer Bedeutung ist der Zusatz von Dispergiermitteln. Diese Mittel beeinflussen die Eigenschaften der Dispersionen in einer Weise, daß nach dem Verdampfen des Verdünnungsmittels, also in der Regel des Wassers, eine spontane Orientierung der Flüssigkristalle mit den damit verbundenen Farbeffekten eintritt.

Als Dispergierhilfsmittel werden vorzugsweise wasserlösliche hochmolekulare organische Verbindungen mit polaren Gruppen, wie Polyvinylpyrrolidon, Copolymerisate aus Vinylpropionat oder -acetat und Vinylpyrrolidon, teilverseifte Copolymerisate aus einem Acrylester und Acrylnitril, Polyvinylalkohole mit unterschiedlichem Restacetatgehalt, Celluloseether, Gelatine oder Mischungen dieser Stoffe eingesetzt. Besonders bevorzugte Schutzkolloide sind Polyvinylalkohol mit einem Restacetatgehalt von unter 35, insbesondere 5 bis 30 Molprozent und/oder ein Vinylpyrrolidon-/Vinylpropionat-Copolymeres mit einem Vinylestergehalt von unter 35, insbesondere 5 bis 30 Gewichtsprozent.

Es konnen sowohl nichtionische wie, in besonderen Fällen, auch ionische Emulgatoren verwendet werden. Bevorzugte Emulgatoren sind längerkettige Alkohole oder Phenole unterschiedlichen Ethoxy- und/oder Propoxylierungsgrades (Addukte von 4 bis 50 mol Ethylenoxid und/oder Propylenoxid). Besonders vorteilhaft sind Kombinationen der oben genannten Schutzkolloide mit derartigen Emulgatoren, da mit ihnen sehr feinteilige Dispersionen erhalten werden.

Weitere geeignete Dispergiermittel sind beispielsweise Dihexylsulfosuccinat, Sulfosuccinathalbester, die Natriumsalze der Dodecylbenzolsulfonsäure und der Pentadecansulfonsäure, Kaliumoleat, Natriumlaurylsulfat, Alkylpolyglykoside, Isooctylphenol, Isononylphenol, $C_{12}$-$C_{18}$Fettalkohole und Fettalkoholalkoxylate,

Besonders geeignet sind weiterhin Dispergierhilfsmittel auf Polysiloxanbasis.

Die beschriebenen Dispergierhilfsmittel eignen sich zur Herstellung von Öl-in-Wasser-Emulsionen. Es ist jedoch auch möglich, Dispersionsbeschichtungsmittel auf der Grundlage von Wasser-in-Öl-Emulsionen herzustellen. Für derartige Dispersionen eignen sich besonders Emulgatoren und Emulgatorgemische, wie sie z.B. in EP-A 0 623 630 beschrieben sind. Geeignete Dispergierhilfsmittel sind weiterhin Sorbitanmonostearat, Sorbitanmonopalmitat, Sorbitantristearat, Sorbitanmonooleat, Sorbitansesquioleat, Polyoxyethylensorbitolether, Polyoxyethylencetylether, Polyoxyethylenstearylether und Polyoxyethylenoleyllether.

Auch Miniemulsionen eignen sich als Grundlage für die erfinddungsemäßen Beschichtungsmittel. Miniemulsionen haben den Vorteil, besonders stabile Emulsionen auszubilden und sind daher besonders lagerstabil. Zur Herstellung der Miniemulsionen werden beispielsweise die oben beschriebenen Emulsionen, die typischerweise Tröpfchendurchmesser im Mikrometerbereich aufweisen, mit Hilfe eines Hochdruckhomogenisators homogenisiert. Auf diese Weise erhält man Emulsionen mit Tröpfchendurchmesser > 200 nm, bei denen über Wochen keine Phasentrennung zu beobachten ist.

Zur Herstellung der Flüssigkristalldispersionen wird die flüssigkristalline Mischung, bestehend aus den Komponenten $a_1$) und/oder $a_2$) und c) gewünschtenfalls mit einer geringen Menge eines Lösungsmittels wie Tetrahydrofuran, Dioxan, Aceton, Methylethylketon, den Propanolen, den Butanolen, Ethylacetat, Butylacetat, Methylenchlorid, den Xylolen oder Toluol oder auch Wasser vermischt, um die Viskosität herabzusetzen. Hierzu eignet sich auch die Zugabe eines polymeren Bindemittels wie Celluloseacetcbutyrat. Vorzugsweise wird jedoch die flüssigkristalline Mischung direkt mit dem Dispergierhilfsmittel, welches auch als wäßrige Losung zugegeben werden kann, versetzt. Die Mischung wird z.B. durch Rühren intensiv homogenisiert. Anschließend wird Wasser zugegeben und wiederum gründlich homogenisiert. Die Menge des Wassers richtet sich nach der gewünschten Verwendung. Vorzugsweise werden 20 bis 80 Gew.-%, besonders bevorzugt 40 bis 60 Gew.-% Wasser zugegeben, bezogen auf die Gesamtmenge der fertigen Dispersion. Die Dispersionen können zur Verarbeitung mit Wasser, dem auch wiederum ein Dispergierhilfsmittel zurgesetzt werden kann, auf die gewünschte Viskosität und Farbmittelkonzentration verdünnt werden.

Zur Härtung der aus der Dispersion gebildeten Filme sind wie für die Lackmischungen thermische Verfahren oder Strahlungsverfahren wie Licht- oder Elektronenstrahlhärtung möglich, je nach Art der polymerisierbaren Gruppe. Auch für die härtbaren Dispersionsfilme ist die Zugabe von Polymerisationsinitiatoren vorteilhaft, wie sie für die Lackmischungen beschrieben sind.

Der Vorteil der Dispersionsbeschichtungen liegt in ihrer leichten Verarbeitbarkeit. Die Dispersionen weisen niedrige Viskositäten auf, können lösungsmittelfrei hergestellt werden und erfordern daher keine Lüftungseinrichtungen und können durch alle bekannten, einfachen Auftragstechniken wie Streichen, Rollen, Spritzen, Drucken, Tauchen oder durch einen Gießspalt aufgetragen werden. Auch aus der Dispersion heraus tritt nach dem erfindungsgemaßen Beschichtungsverfahren eine spontane Orientierung auf, so daß der gewunschte, vom Betrachtungswinkel abhängige Farbeindruck entsteht.

Beispiele

Beispiel 1

Herstellung einer Flüssigkristallmischung des Aufbaus Ia

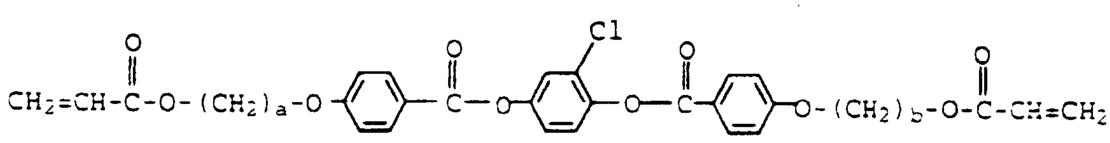

a, b = 2, 4 oder 6

Eine Mischung aus 100 ml Pyridin und 14,4 g (100 mmol) 2-Chlorhydrochinon wurden bei 20°C allmählich mit einer Lösung aus

18,78 g (67 mmol) 4-(2-Acryloxyethoxyl-benzoesäurechlorid,
19,92 g (67 mmol) 4-(2-Acryloxybutoxy)-benzoesäurechlorid und
20,65 g (67 mmol) 4-(2-Acryloxyhexoxy)-benzoesäurechlorid

in 100 ml Toluol versetzt. Anschließend wurde das Reaktionsgemisch noch 4 h unter Rühren auf 60°C gehalten, wonach

es auf ein Gemisch aus Eis und Salzsäure gegeben und wie üblich aufgearbeitet wurde.

Durch die unterschiedlichen Alkylenspacer in den Ausgangsverbindungen fiel ein statistisches Gemisch aus 9 möglichen Isomeren an (Ausbeute 89 %), welches ein vorteilhafteres Phasenverhalten zeigt als eine Einzelverbindung.

Phasenverhalten: N 91 - 98°C I

Beispiel 2

Herstellung einer cholesterischen Flüssigkristallmischung A

9,5 g der in Beispiel 1 hergestellten Flüssigkristallmischung, 0,5 g 1,4:3,6-Dianhydrosorbit-2,5-bis(4'-(6-acryloxyhexoxy)benzoesäure)ester und 20 ml Dichlormethan wurden gemischt. Anschließend wurde das Lösungsmittel im Vakuum bei 70°C entfernt.

Beispiel 3

Herstellung einer cholesterischen Flüssigkristallmischung B

9,3 g der in Beispiel 1 hergestellen Flüssigkristallmischung, 0,7 g 1,4:3,6-Dianhydrosorbit-2,5-bis(4'-(6-acryloxyhexoxy)benzoesäure)ester und 20 ml Dichlormethan wurden gemischt. Anschließend wurde das Lösungsmittel im Vakuum bei 70°C entfernt.

Beispiel 4

Herstellung einer cholesterischen Flüssigkristallmischung C

10,0 g der in Beispiel 1 hergestellten Flüssigkristallmischung, 0,5g 1,4:3,6-Dianhydrosorbit-2,5-bis(4'-(6-acryloxyhexoxy)benzosäure)ester und 20 ml Dichlormethan wurden gemischt. Anschließend wurde das Lösungsmittel im Vakuum bei 70°C entfernt.

Beispiel 5

Herstellung einer cholesterischen Flüssigkristallmischung D

Die Flüssigkristallmischung wurde analog zu Beispiel 3 hergestellt, als chirale Komponente wurde jedoch 1,4: 3,6-Dianhydrosorbit-2,5-bis(4'- (2-acryloxyethoxy Ibenzoesäurel ester eingesetzt.

Beispiel 6

Herstellung eines cholesterischen spritzbaren Lackes

10,5 g der cholesterischen Flüssigkristallmischung C wurden mit 0,15 g 2,4,6-Trimethylbenzoyldiphenylphosphinoxid, 1 g Toluol und 4 g Essigester verrührt, bis eine homogene Lösung entstand. Diese cholesterische Mischung wurde in eine Hochdruckspritzpistole (Fa. Proxxon, Gala 500) gefüllt und mit 3 bar Druck jeweils auf eine schwarz lackierte Metall-, Glas- oder Papieroberfläche gespritzt. Die feinen Tropfen wurden mit einer Quecksilberentladungslampe (80 W/$cm^2$) 5 sec bestrahlt, bis die Oberfläche klebfrei war. Der Spritzvorgang wurde so oft wiederholt, bis eine einheitliche, gleichmäßig von cholesterischem Flüssigkristall bedeckte Oberfläche entstand. Der Durchmesser der durch das Spritzen entstandenen plättchenförmigen Körper auf der behandelten Oberfläche betrug 20 bis 50 µm.

Beispiel 7

Es wurde gearbeitet wie in Beispiel 6, wobei 0,15 g eines thermochemischen Initiators eingesetzt wurden. Der Lack wurde auf eine schwarz lackierte Metalloberfläche gespritzt und anschließend durch thermische Behandlung (120 min bei 65°C) vernetzt.

Beispiel 8

Herstellung einer cholesterischen Tinte

5 g der cholesterischen Flüssigkristallmischung D wurden unter Gelblicht mit 0,075 g 2,4,6-Trimethylbenzoyldiphenylphosphinoxid, 0,25 g Toluol und 1,5 g Graphitpigment verrührt, bis eine gleichmäßige Verteilung des Pigments und des Starters gegeben war. Die so hergestellte Mischung ließ sich in eine Druckpatrone einfüllen und über einen Füllfederhalter auf schwarzes Papier schreiben. Nach der Photopolymerisation wurde ein Schriftbild mit Farbwechsel von bronzerot nach grün erhalten. Diese Mischung ließ sich auch als Streichfarbe zum Bestreichen größerer Flächen mit Pinsel oder ähnlichen Auftragsmitteln verwenden. Auch im Siebdruckverfahren konnte die Mischung aufgetragen werden.

Beispiel 9

Cholesterisch flüssigkristalline Lackfarbe

Zu 2 g cholesterisch flüssigkristalliner Mischung A wurden 1,4 g Toluol, 0,5 g Polyvinylalkohol und 1 ml Ethanol gegeben und die Mischung dispergiert. Es entstand eine trübe niedrigviskose Mischung. Diese wurde mit einer Spritzpistole wie in Beispiel 6 auf das schwarz lackierte Substrat aufgetragen. Nach Abdampfen des Lösungsmittels wurde die gebildete, im Roten reflektierende flüssigkristalline Schicht durch Bestrahlung mit Licht ausgehärtet. Die ausgehärtete Schicht war stabil gegen den Einfluß von Lösungsmitteln, Temperatur und Licht.

Beispiel 10

Schwarz pigmentierte cholesterisch flüssigkristalline Lackfarbe

Zu der im Beispiel 9 angegebenen Mischung wurden 0,3 g Schwarzpigment gegeben und homogenisiert. Diese Mischung wurde durch Spritzen wie in Beispiel 6 auf ein unbeschichtetes metallisches Substrat aufgetragen. Es entstand nach Ablüften eine gut deckende, rot reflektierende Schicht, welche durch Bestrahlung mit Licht ausgehärtet wurde. Die ausgehärtete Schicht war stabil gegen den Einfluß von Lösungsmitteln, Temperatur und Licht.

Beispiel 11

Zu der im Beispiel 9 angegebenen Mischung wurde 0,3 g Schwarzpigment sowie 0,04 g eines UV-Stabilisators gegeben und homogenisiert. Diese Mischung wurde durch Spritzen auf ein unbeschichtetes Substrat aufgetragen. Es entstand nach Ablüften eine gut deckende, rot reflektierende Schicht, welche durch Bestrahlung mit Licht ausgehärtet wurde. Die ausgehärtete Schicht war stabil gegen den Einfluß von Lösungsmitteln, Temperatur und Licht.

Beispiel 12

Cholesterisch flüssigkristalline Lackfarbe

Zu 10 g der cholesterischen flüssigkristallinen Mischung B wurden 0,4 g einer 20%igen Lösung von CAB (Celluloseacetatbutyrat) in Butylacetat sowie 7 g Butylacetat gegeben und die Lösung homogenisiert, Es entstand eine leicht viskose, transparente Lösung, Diese Mischung wurde durch mehrmaliges Spritzen und zwischenzeitliches Ablüften auf eine schwarz grundierte Oberfläche aufgetragen. Nach Ablüften des letzten Auftrages wurde photochemisch polymerisiert. Hierzu wurde die beschichtete Oberfläche mit einer UV-Lampe (OSRAM-Nitraphot, Abstand 30 cm, Stickstoffatmosphäre) 30 Sekunden belichtet. Es resultierte ein gleichmäßiger, gut verlaufender festhaftender Film mit einer Schichtdicke von 16 μm, welcher einen blickwinkelabhängigen Farbeindruck mit einem Farbwechsel von grün nach blau aufwies.

Beispiel 13

Cholesterisch flüssigkristalline Lackfarbe

Zu der cholesterisch flüssigkristallinen Mischung A wurden 0,04 g einer 20 %igen Lösung von CAB (Celluloseacetatbutyrat) gelöst in Butylacetat sowie 1,4 g Butylacetat gegeben und die Lösung homogemisiert. Es entstand eine leicht viskose, transparente Lösung. Diese Mischung wurde durch mehrmaliges Spritzen und zwischenzeitliches

Ablüften auf eine schwarzgrundierte Oberfläche aufgetragen. Nach Ablüften des letzten Auftrages wurde photochemisch polymerisiert. Es resultierte ein gleichmäßiger, gut verlaufender festhaftender Film mit einer Schichtdicke von 15 µm, welcher einen blickwinkelabhängigen Farbeindruck mit einem Farbwechsel von rot nach grün aufwies.

Beispiel 14

Gemäß Beispiel 13 wurde ein cholesterisch flüssigkristalliner Lack hergestellt. Nach der Aushärtung wurde darauf ein handelsüblicher Klarlack aufgetragen und anschließend gehärtet. Die so hergestellte Beschichtung wies gegenüber einer Beschichtung ohne Klarlack einen erhöhten Glanz sowie eine verbesserte Beständigkeit gegen Licht und Feuchtigkeit auf.

Ein solcher Lackaufbau aus ETL, Füller, cholesterischem Lack und Klarlack wurde einem Kurzbewitterungstest unterworfen (WOM). Es trat kein Farbtonunterschied und keine Enthaftung zwischen den Schichten auf.

Beispiel 15

Zu 2 g des spritz-, streich- und tauchfähigen Lackes aus Beispiel 12 wurden 0,3 g eines Schwarzpigments gegeben und die entstandene Dispersion homogenisiert. Es entstand eine schwarze, niedrig viskose Dispersion. Diese wurde durch mehrmaliges Spritzen und zwischenzeitliches Ablüften auf eine weiß grundierte Oberfläche aufgetragen.

Nach Ablüften des letzten Auftrages wurde photochemisch mit einer Quecksilberentladungslampe (80 W/cm) polymerisiert. Es resultierte ein gleichmäßiger, gut verlaufender festhaftender Film mit hoher Deckkraft, welcher einen blickwinkelabhängigen Farbeindruck (grün/blau) aufwies.

Beispiel 16

Zu 2 g des Lackes aus Beispiel 13 wurde das Hilfsmittel BYK 055 (Hersteller: Firma Byk, Wesel) in einer Menge von 0,01 g der Lieferform zugesetzt. Es entstand eine leicht viskose, transparente Lösung. Diese Mischung wurde durch mehrmaliges Spritzen und zwischenzeitliches Ablüften auf eine schwarz grundierte Oberfläche aufgetragen. Nach Ablüften des letzten Auftrages wurde photochemisch polymerisiert. Es resultierte ein gleichmäßiger, gut verlaufender, festhaftender, eine hohe Oberflächenhärte aufweisender Film, welcher einen blickwinkelabhangigen Farbeindruck mit einem Farbwechsel von rot nach grün aufwies. Die Schichtdicke betrug 14 µm.

Beispiel 17

Zu 2 g des Lackes aus Beispiel 13 wurde das Hilfsmittel BYK 057 (Hersteller Fa. Byk, Wesel) in einer Menge von 0,01 g der Lieferform zugesetzt. Es entstand eine leicht viskose, transparente Lösung. Diese Mischung wurde durch mehrmaliges Spritzen und zwischenzeitliches Ablüften auf eine schwarz grundierte Oberfläche aufgetragen. Nach Ablüften des letzten Auftrages wurde photochemisch polymerisiert. Es resultierte ein gleichmäßiger, gut verlaufender, festhaftender, eine hohe Oberflächenhärte aufweisender Film, welcher einen blickwinkelabhängigen Farbeindruck mit einem Farbwechsel von rot nach grün aufwies. Die Schichtdicke betrug 14 µm.

Beispiel 18

Vergleichsversuch: Druckpaste ohne Dispergierhilfsmittel

Die pastöse cholesterische Flüssigkristallmischung A wurde auf dem Wasserbad unter Stickstoff auf 40°C erwärmt. Unter Rühren wurden 1,5 Gew.-% (bezogen auf das Flüssigkristallmaterial: 2,4,6-Trimethylbenzoyldiphenylphosphinoxid zugesetzt und über 10 Minuten homogen eingerührt. Nach Abkühlen auf 25°C wurde auf einer FOGRA-Druckmaschine mit variablem Farbauftrag auf einen weißen Kartondruckträger mit schwarzen Feldern mit 1,5 g/m-Farb-Auftrag im Offset gedruckt. Es wurde unter Gelblich gearbeitet.

Nach einer Verweilzeit von 5 Minuten unter Stickstoff wurde der Druckfilm durch Lichteinstrahlung mit einer UV-Lampe (200 bis 230 V/300 W 4FZ) über 3 Minuten ausgehärtet.

Es entstand ein über schwarzem Untergrund sichtbarer schwach zwischen grün und kupferfarben wechselnder Belag, der eine körnige Struktur aufwies und auch mechanisch rauh war. Die lichtmikroskopische Aufnahme zeigte, daß der Belag nicht kohärent war, sondern aus vielen kleinen Flüssigkzistallinseln auf unbeneiztem schwarzen Untergrund bestand.

Beispiel 19

Die Flüssigkristallpaste wurde wie in Beispiel 18 auf dem Wasserbad unter Stickstoff auf 40°C erwärmt. Unter Rühren wurden 0,5 Gew.-% des PIBSA-Additivs (Polyisobutylenbernsteinsäureanhydrid) (bezogen auf das Gewicht des Flüssigkristallmaterials) über 2 Minuten eingerührt, dann wurde 1,5 Gew.-% (bezogen auf das Gewischt des Flüssigkristallmaterials) 24,6-Trimethylbenzoyldiphenyiphosphinoxid zugesetzt und über 10 Minuten gerührt. Unter Gelblicht wurde auf einer FOGRA-Druckmaschine mit variablem Farbauftrag auf weißem Kartondruckträger mit schwarzen Feldern mit 1,5 $g/m^2$ Farbauftrag im Offset gedruckt. Anreibedauer: 40 sec.

Nach einer Verweilzeit von 3 Minuten unter Stickstoff wurde der Druckfilm durch Lichteinstrahlung mit einer UV-Lampe wie im Versuch 1 ausgehärtet.

Es entstand ein über schwarzem Grund deutlich sichtbarer zwischen grün und kupferfarben wechselnder Film, der wesentlich farbstärker und homogener erschien als derjenige, der im Beispiel 18 hergestellt wurde. Die lichtmikroskopische Aufnahme zeigte, daß der Belag wesentlich kohärenter war als beim Beispiel 18 und daß gegenüber Beispiel 18 weniger Stellen des Substrats nicht benetzt bzw. beschichtet waren. Die mechanische Rauhigkeit des Films nahm ab.

Beispiel 20

Es wurde wie im Beispiel 19 vorgegangen, mit dem einzigen Unterschied, daß dem Flüssigkristallmaterial 5 Gew.-% PIBSA-Additiv, bezogen auf das Gewicht des Flüssigkristalls, zugesetzt wurden.

Es entstand ein Film, dessen optische Eigenschaften und Homogenität weiter verbessert waren. Der Film erschien farbkräftiger als in Beispiel 19 und war homogener.

Beispiel 21

Es wurde wie in Beispiel 19 vorgegangen, mit dem unterschied, daß dem Flüssigkristallmaterial 10 Gew.-% PIBSA-Additiv, bezogen auf das Gewicht des Flüssigkristalls, zugesetzt wurden.

Es entstand ein Film, dessen Homogenität weiter verbessert war. Was die optischen Eigenschaften des Films betraf, so waren diese von geringfügig geringerer Qualität als bei Beispiel 20. Der Film erschien etwas dunkler und der Farbtonumschlag von grün nach kupferfarben war beeinträchtigt.

Beispiel 22

Es wurde wie in Beispiel 20 vorgegangen, mit dem Unterschied, daß anstelle des flächigen Druckes (Beispiele 18 bis 21) mit einer gerasterten Druckwalze (56er Raster) diskrete Punkte gedruckt wurden.

Sowohl auf Papier als auch auf transparenter Kunststoff-Folie ließ sich ein Raster mit abgestufter Intensität drucken.

Mikroskopische Untersuchungen zeigten, daß die Rasterpunkte eine Dicke von 1,5 μ und einen Durchmesser von 5 μ aufwiesen. Die Druckbilder zeigten einen dem vollflächigen Druck vergleichbaren Farbwechsel.

Beispiel 23

Es wurde wie in Beispiel 19 vorgegangen, mit dem Unterschied, daß dem Flüssigkristallmaterial gleichzeitig 5 Gew.-% PIBSA-Additiv, 1 Gew.-% Ruß und 1,5 Gew.-% 2,4,6-Trimethylbenzoyldiphenylphosphinoxid zugesetzt wurden. Nach 10minütigem Rühren wurde unter Gelblicht auf der FOGRA-Maschine gedruckt.

Man erhielt einen über schwarzem Untergrund äußerst brillanten zwischen grün und kupferfarben wechselnden Film, der homogen war und in der optischen Qualität sogar noch den Druck aus Beispiel 20 übertraf.

Beispiel 24

In die Flüssigkristallpaste wurden bei Raumtemperatur (25°C) 5 Gew.-% des PIBSA-Additivs unter Stickstoff eingerührt. Nach fünfminütigem Einrühren wurde 1,5 Gew.-% 2,4,6-Trimethylbenzoyldiphenylphosphinoxid zugegeben und weitere 10 Minuten gerührt. Anschließend wurde die Paste mit einer Siebdruckmaschine mit automatischem Rakel (Maschenweite des Siebs: 70 Öffnungen pro $inch^2$) auf einen mit schwarzem Muster versehenen weißen Karton gedruckt.

Nach Aushärten des Films unter einer UV-Lampe (200 bis 230 V/300 W 4FZ) über 5 Minuten erhielt man eine dekorative farbige Beschichtung mit betrachtungswinkelabhängigem Farbton, die besonders über schwarz deutlich zwischen kupferfarben und grün wechselte.

Beispiel 25

Wäßrige Dispersionsfarbe mit blickwinkelabhängigem Farbeindruck.

4,5 g cholesterische Flüssigkristallmischung A, 0,2 g 2,4,6-Trimethylbenzoyldiphenylphosphinoxid 0,08 g Celluloseacetobutyrat und 1,5 g 33 gew.-%ige wäßrige Polyvinylpyrrolidon-Lösung wurden durch intensives Rühren 30 min homogenisiert. Zu dieser Dispersion, wurden anschließend 4 g Wasser gegeben und weitere 20 min durch weiteres Rühren homogenisiert. Es entstand eine wäßrige Dispersion eines cholesterischen Flüssigkristalles in Wasser.

Beispiel 26

Die im Beispiel 25 erhaltene Dispersion wurde durch Streichen auf ein schwarz lackiertes Blech aufgetragen. Nach Ablüften entstand eine bei senkrechtem Blick blau erscheinende Farbschicht, welche den Farbton nach violett wechselte, wenn die Blickrichtung von der Senkrechten abwich. Die so erhaltene Schicht wurde dann durch Belichten mit UV-Licht gehärtet. Der Farbeindruck blieb erhalten.

Beispiel 27

Die im Beispiel 25 erhaltene Dispersion wurde durch Spritzen auf ein schwarz lackiertes Blech aufgetragen. Nach Ablüften entstand eine bei senkrechtem Blick blau erscheinende Farbschicht, welche den Farbton nach violett wechselte, wenn die Blickrichtung von der Senkrechten abwich. Die so erhaltene Schicht wurde dann durch Belichten mit UV-Licht gehärtet. Der Farbeindruck blieb erhalten.

Beispiel 28

Lösungsmittelarme, wasserverdünnbare Dispersionsanstrichfarbe.

3 g cholesterische Flüssigkristallmischung B, 0,2 g 2,4,6-Trimethylbenzoyldiphenylphosphinoxid und 0,08 g Celluloseacetobutyrat wurden in 1,5 g Butylacetat gelöst. Zu dieser Lösung wurden 1,5 g 33 gew.-%ige wäßrige Polyvinylpyrrolidon-Lösung gegeben und durch intensives Rühren 30 min homogenisiert. Zu dieser Dispersion wurden anschließend 4 g Wasser gegeben und kurz homogenisiert.

Es entstand eine stark lichtstreuende, lösungsmittelarme, wäßrige Dispersion.

Beispiel 29

Die im Beispiel 28 erhaltene Dispersion wurde durch Streichen auf ein schwarz lackiertes Blech aufgetragen. Nach Ablüften entstand eine bei senkrechtem Blick grun erscheinende Farbschicht, welche den Farbton nach blau wechselte, wenn die Blickrichtung von der Senkrechten abwich. Die so erhaltene Schicht wurde dann durch Belichten mit UV-Licht gehärtet. Der Farbeindruck blieb erhalten.

Beispiel 30

Die im Beispiel 28 erhaltene Dispersion wurde durch Spritzen auf ein schwarz lackiertes Blech aufgetragen. Nach Ablüften entstand eine bei senkrechtem Blick grün erscheinende Farbschicht, welche den Farbton nach blau wechselte, wenn die Blickrichtung von der Senkrechten abwich. Die so erhaltene Schicht wurde dann durch Belichten mit UV-Licht gehärtet. Der Farbeindruck blieb erhalten.

Beispiel 31

Die im Beispiel 28 erhaltene Dispersion wurde durch Streichen auf ein Holzsubstrat aufgetragen. Nach Ablüften entstand eine bei senkrechtem Blick grün erscheinende Farbschicht, welche den Farbton nach blau wechselte, wenn die Blickrichtung von der Senkrechten abwich. Die so erhaltene Schicht wurde dann durch Belichten mit UV-Licht unter Erhalt des Farbeindruckes gehärtet.

Beispiel 32

Dispersionbeschichtungsmittel auf Basis von Wasser-in-Öl-Emulsionen

2 c cholesterische Flüssigkristallmischung A, 0,1 g 2,4,5-Trimethylbenzoyldiphenylphosphinoxid und 0,04 g Celluloseacetobutyral und 0,1 g Polyoxyethylenstearylether wurden durch intensives Rühren homogenisiert. Anschließend wurde 1 ml Wasser zugegeben und weitere 2 Stunden gerührt. Es entstand Unterrühren von einem weiteren ml Wasser wurde eine stabile fließfähige Paste, nach einem weiteren ml Wasser eine dünnflüssige Emulsion erhalten.

Beispiel 33

Analog Beispiel 32 wurde eine Mischung mit 0,2 g Polyoxyethylenstearylether hergestellt und sukzessiv mit je 1 ml Wasser versetzt. Nach Rühren entstanden Emulsionen mit ähnlicher Charakteristik, wie in Beispiel 32 beschrieben, jedoch mit etwas höherer Viskosität.

**Patentansprüche**

1. Verfahren zur Beschichtung mittels Spritzen, Rollcoaten, Tauchen oder mit Hilfe eines Gießspaltes oder zum Bedrucken von Substraten mit einem Beschichtungs- bzw. einem Bedruckungsmittel, **dadurch gekennzeichnet, daß** man eine polymerisierbare Masse, die flüssigkristalline, polymerisierbare Monomere, welche zwei reaktive Gruppen enthalten, enthält, auf das Substrat aufbringt und daß man anschließend die Polymerisation vornimmt, wobei das Beschichtungsmittel bzw. das Bedruckungsmittel

    $a_1$) ein chirales flüssigkristallines Monomeres und

    b) ein polymeres Bindemittel und/oder monomere Verbindungen, die durch Polymerisation in das polymere Bindemittel überführt werden können oder, im Falle von Dispersionsbeschichtungen und Druckfarben, ein Dispergierhilfsmittel d)

    enthält, oder das Beschichtungsmittel bzw. das Bedruckungsmittel

    $a_2$) ein achirales flüssigkristallines Monomeres,

    b) ein polymeres Bindemittel und/oder monomere Verbindungen, die durch Polymerisation in das polymere Bindemittel überführt werden können oder, im Falle von Dispersionsbeschichtungen und Druckfarben, ein Dispergierhilfsmittel d) und

    c) eine nicht flüssigkristalline chirale Verbindung

    enthält.

2. Verfahren nach Anspruch 1, **dadurch gekennzeichnet, daß** das Beschichtungs- bzw. Bedruckungsmittel zusätzlich zu den Komponenten $a_2$), b), c) und/oder d) ein chirales flüssigkristallines Monomeres enthält.

3. Verfahren nach den Ansprüchen 1 oder 2, **dadurch gekennzeichnet, daß** die chirale Verbindung c) mindestens eine reaktive Gruppe trägt, die einer Polymerisation zugänglich ist.

4. Verfahren nach den Ansprüchen 1 bis 3, **dadurch gekennzeichnet, daß** die Auftragung und anschließende Härtung bei einer Temperatur im Bereich von 10 bis 180°C erfolgt.

5. Verfahren nach den Ansprüchen 1 bis 4, **dadurch gekennzeichnet, daß** das Beschichtungs- bzw. Bedruckungsmittel statt der Komponente b) als Komponente d) ein Dispergierhilfsmittel enthält.

6. Materialien, die nach einem Verfahren gemäß den Ansprüchen 1 bis 5 beschichtet worden sind.

7. Verfahren nach den Ansprüchen 1 bis 5, **dadurch gekennzeichnet, daß** mindestens zwei übereinander angeordnete Schichten auf das Substrat aufgetragen werden, die sich dadurch unterscheiden, daß die chirale Verbindung in der einen Schicht jeweils den entgegengesetzten und ähnlich großen Helixdrehsinn zu der chiralen Verbindung in der anderen Schicht zeigt.

8. Als Druckpaste geeignete Mischungen gemäß den Ansprüchen 1 bis 3, in denen die Komponente b) durch ein löslichkeitssteigerndes Dispergierhilfsmittel d) ersetzt ist.

**9.** Mischungen nach Anspruch 8, in denen das Dispergierhilfsmittel d) ein Derivat der Alkenyl- oder Alkylbernsteinsäure ist.

**10.** Als Dispersionsfarbe geeignete Mischungen gemäß den Ansprüchen 1 bis 3, in denen die Komponente b) durch ein löslichkeitssteigerndes Dispergierhilfsmittel d) ersetzt ist und weitere für Dispersionsfarben übliche Hilfsmittel in den üblichen Mengen enthalten sind.

**11.** Als Dispersionsfarbe geeignete Mischungen nach Anspruch 10, in denen als Lösungs- oder Verdünnungsmittel überwiegend Wasser enthalten ist.

**12.** Verfahren zur Herstellung von Pigmenten, die polymerisierbare flüssigkristalline Verbindungen oder Mischungen gemäß den Ansprüchen 1 bis 3 enthalten, durch Druckverfahren gemäß den Ansprüchen 1 bis 5 und/oder 7.

## Claims

**1.** A process for coating by spraying, roll coating, dipping or with with the aid of a casting slot, or for printing substrates with a coating or printing composition, which comprises applying a polymerizable material containing liquid-crystalline, polymerizable monomers which contain two reactive groups to the substrate, and subsequently carrying out the polymerization, where the coating composition or the printing composition comprises

$a_1$) a chiral liquid-crystalline monomer and

b) a polymeric binder and/or monomeric compounds which can be converted into the polymeric binder by polymerization, or, in the case of emulsion coatings and printing inks, a dispersion auxiliary d),

or the coating composition or the printing composition comprises

$a_2$) an achiral liquid-crystalline monomer,

b) a polymeric binder and/or monomeric compounds which can be converted into the polymeric binder by polymerization, or, in the case of emulsion coatings and printing inks, a dispersion auxiliary d), and

c) a non-liquid-crystalline chiral compound.

**2.** A process as claimed in claim 1, wherein the coating or printing composition comprises, in addition to components $a_2$), b), c) and/or d), a chiral liquid-crystalline monomer.

**3.** A process as claimed in claim 1 or 2, wherein the chiral compound c) carries at least one reactive group which is susceptible to polymerization.

**4.** A process as claimed in any of claims 1 to 3, wherein the application and subsequent curing are carried out at from 10 to 180°C.

**5.** A process as claimed in any of claims 1 to 4, wherein the coating or printing composition contains a dispersion auxiliary as component d) instead of component b).

**6.** A material which has been coated by a process as claimed in any of claims 1 to 5.

**7.** A process as claimed in any of claims 1 to 5, which comprises coating the substrate with at least two layers, one on top of the other, which differ in that the chiral compound in one layer in each case exhibits the opposite direction of rotation of the helix of similar magnitude to the chiral compound in the other layer.

**8.** A mixture as claimed in any of claims 1 to 3 which is suitable as a printing paste, in which component b) has been replaced by a dispersion auxiliary d) which increases the solubility.

**9.** A mixture as claimed in claim 8, in which the dispersion auxiliary d) is a derivative of an alkenyl- or alkylsuccinic acid.

10. A mixture as claimed in any of claims 1 to 3 which is suitable as an emulsion paint, in which component b) has been replaced by a dispersion auxiliary d) which increases the solubility, and further auxiliaries which are conventional in emulsion paints are present in the conventional amounts.

11. A mixture as claimed in claim 10 which is suitable as an emulsion paint, in which the solvent or diluent present is predominantly water.

12. A process for the preparation of pigments containing polymerizable, liquid-crystalline compounds or mixtures as claimed in any of claims 1 to 3 by printing processes as claimed in any of claims 1 to 5 and/or 7.

**Revendications**

1. Procédé d'enduction au pistolet, au rouleau, au trempé ou à l'aide d'une fente de coulée, ou d'impression de substrats avec un agent d'enduction ou d'impression, **caractérisé en ce que** l'on dépose sur le substrat une masse polymérisable contenant des monomères polymérisables cristaux liquides, comportant deux groupements réactifs, et **en ce que** l'on réalise ensuite la polymérisation, l'agent d'enduction ou d'impression contenant :

   $a_1$) un monomère cristal liquide chiral, et

      b) un liant polymère et/ou des composés monomères pouvant être transformés par polymérisation en le liant polymère, ou encore, dans le cas d'enductions en dispersion ou d'encres d'imprimerie, un auxiliaire de dispersion d)

   ou encore l'agent d'enduction ou l'agent d'impression contenant
   $a_2$) un monomère cristal liquide achiral,

      b) un liant polymère et/ou des composés monomères pouvant être transformés par polymérisation en le liant polymère, ou encore, dans le cas d'enductions en dispersion et d'encres d'imprimerie, un auxiliaire de dispersion d), et
      c) un composé chiral qui n'est pas un cristal liquide.

2. Procédé selon la revendication 1, **caractérisé en ce que** l'agent d'enduction ou l'agent d'impression contient, outre les composants $a_2$), b), c) et/ou d), un monomère chiral cristal liquide.

3. Procédé selon les revendications 1 ou 2, **caractérisé en ce que** le composé chiral c) porte au moins un groupe réactif pouvant subir une polymérisation.

4. Procédé selon les revendications 1 à 3, **caractérisé en ce que** l'application et le durcissement effectué ensuite ont lieu à une température comprise entre 10 et 180°C.

5. Procédé selon les revendications 1 à 4, **caractérisé en ce que** l'agent d'enduction ou l'agent d'impression contient, au lieu du composant b), un auxiliaire de dispersion en tant que composant d).

6. Matériaux qui ont été revêtus par un procédé selon les revendications 1 à 5.

7. Procédé selon les revendications 1 à 5, **caractérisé en ce qu'**au moins deux couches superposées sont appliquées sur le substrat, qui se distinguent par le fait que le composé chiral se trouvant dans l'une des couches présente un sens de rotation de l'hélice opposé et un pas identique à ceux du composé chiral de l'autre couche.

8. Mélanges convenant à une pâte d'impression selon les revendications 1 à 3, dans lesquels le composant b) est remplacé par un auxiliaire de dispersion d) qui augmente la solubilité.

9. Mélanges selon la revendication 8, dans lesquels l'auxiliaire de dispersion d) est un dérivé d'un acide alcényl- ou alkylsuccinique.

10. Mélanges convenant en tant que peinture en dispersion selon les revendications 1 à 3, dans lesquels le composant b) est remplacé par un auxiliaire de dispersion d) augmentant la solubilité, et qu'ils contiennent, en les quantités

usuelles, d'autres auxiliaires usuels des peintures en dispersion.

**11.** Mélanges convenant à une peinture en dispersion selon la revendication 10, qui en tant que solvants ou diluants contiennent essentiellement de l'eau.

**12.** Procédé de préparation de pigments contenant des composés ou mélanges polymérisables cristaux liquides selon les revendications 1 à 3, par des procédés d'impression selon les revendications 1 à 5 et/ou 7.